# EUROPEAN PATENT APPLICATION

(11) **EP 3 076 651 A1**
(43) Date of publication of application: **05.10.2016**
(21) Application number: 14876548.0
(22) Date of filing: 28.07.2014
(51) Int. Cl.: H04N 1/00

(54) **VIDEO DATA ENCODING AND DECODING METHODS AND DEVICES**

(30) Priority: 31.12.2013 CN 201310754175
(71) Applicant: Huawei Technologies Co., Ltd, Shenzhen, Guangdong 518129 (CN)
(72) Inventor: SYCHEV, Maxim, Shenzhen Guangdong 518129 (CN); SONG, Jin, Shenzhen Guangdong 518129 (CN); STEPIN, Victor, Shenzhen Guangdong 518129 (CN)
(74) Representative: Pfenning, Meinig & Partner mbB
(86) International application number: PCT/CN2014/083134
(87) International publication number: WO 2015/101031

(57) **Abstract**

The present invention relates to the field of coding and decoding technologies, and discloses video data coding and decoding methods and apparatuses, which can improve coding efficiency or is low in transmission flexibility. The decoding method provided by the present invention includes: determining a first to-be-decoded information group in a to-be-decoded bitstream, where the first to-be-decoded information group includes data information, attribute information, and location information of the first to-be-decoded information group; determining a reference information group set in a case in which the attribute information represents that the first to-be-decoded information group is a redundant information group; and discarding the first to-be-decoded information group if location information of at least one reference information group in the reference information group set is the same as the location information of the first to-be-decoded information group, or parsing the data information if location information of all reference information groups in the reference information group set is different from the location information of the first to-be-decoded information group.

## Description

### TECHNICAL FIELD

The present invention relates to the field of coding and decoding technologies, and in particular, to video data coding and decoding methods and apparatuses.

### BACKGROUND

In a video communications system, RTP (Real-time Transport Protocol, Real-time Transport Protocol) is generally used to code video data, to generate an RTP data packet; then, UDP (User Datagram Protocol, User Datagram Protocol) is used to transmit the RTP data packet. A video is formed by multiple pictures, and one picture is formed by at least one slice. However, UDP is an unreliable transmission protocol; in a transmission process, a packet loss easily occurs during network congestion; therefore, quality of a video reconstructed by a decoder is affected.

In order to resolve the foregoing problem, a redundant picture technology may be introduced in a video data coding process, which may specifically include: in the video data coding process, generating one or more redundant slices corresponding to a basic slice; and packaging the basic slice and the redundant slice into different packets for transmission, where a picture is formed by at least one slice. In this way, a decoder may perform decoding by using the following method: parsing a slice header of a current slice to obtain attribute information of the current slice, where the attribute information of the current slice is used to represent that the current slice is a basic slice or redundant slice; discarding the current slice when the current slice is a redundant slice and a basic slice corresponding to the current slice is a normal slice (that is, a slice without a packet loss); and if the current slice is a redundant slice and a basic slice corresponding to the current slice is an exceptional slice (that is, a slice with a packet loss), copying slice header information of the basic slice to a header of the current slice, and continuing to parse other information of the current slice, so as to reconstruct a video by using the redundant slice.

According to the foregoing decoding method, a basic slice needs to be decoded before a redundant slice corresponding to the basic slice is decoded, which requires the basic slice to be transmitted before the redundant slice corresponding to the basic slice is transmitted, resulting in low transmission flexibility; in addition, a slice needs to be marked as a basic slice or redundant slice in a video data coding process, which results in low coding efficiency.

### SUMMARY

Embodiments of the present invention provide video data coding and decoding methods and apparatuses, which can improve coding efficiency or is low in transmission flexibility.

To achieve the foregoing objective, the following technical solutions are used in the embodiments of the present invention:
According to a first aspect, a video data coding method is provided, including:
   determining a to-be-coded information group in a to-be-coded video sequence, where the to-be-coded information group includes first to-be-coded data;
   generating a redundant information group corresponding to the to-be-coded information group, where the redundant information group includes second to-be-coded data, and location information of the redundant information group is the same as location information of the to-be-coded information group in the to-be-coded video sequence;
   coding the first to-be-coded data and the location information to generate a first information group; and
   coding the second to-be-coded data and the location information to generate a second information group.

With reference to the first aspect, in a first possible implementation manner, the coding the second to-be-coded data and the location information to generate a second information group includes:
when a reference information group set includes the first information group, coding the second to-be-coded data and the location information to generate the second information group, where the reference information group set consists of a reference information group, and the reference information group refers to an information group generated after the to-be-coded information group in the to-be-coded video sequence is coded.

With reference to the first aspect, in a second possible implementation manner, the coding the first to-be-coded data and the location information to generate a first information group includes:
coding the first to-be-coded data, the location information, and attribute information of the first information group to generate the first information group, where the attribute information of the first information group is used to represent that the first information group is a basic information group.

With reference to the second possible implementation manner of the first aspect, in a third possible implementation manner, the attribute information of the first information group is located in a network abstraction layer unit header of the first information group.

With reference to the first aspect, in a fourth possible implementation manner, the coding the second to-be-coded data and the location information to generate a second information group includes:
coding the second to-be-coded data, the location information, attribute information of the second information group, and a network abstraction layer unit type of the first information group to generate the second information group, where the attribute information of the second information group is used to represent that the second information group is the redundant information group.

With reference to the fourth possible implementation manner of the first aspect, in a fifth possible implementation manner, the attribute information of the second information group is located in a network abstraction layer unit header of the second information group.

With reference to the fourth possible implementation manner or the fifth possible implementation manner of the first aspect, in a sixth possible implementation manner, the network abstraction layer unit type of the first information group is located in a side information set of the second information group.

With reference to the first aspect, in a seventh possible implementation manner, the location information includes: a display location of the to-be-coded information group in the to-be-coded video sequence, or a coding location of the to-be-coded information group in the to-be-coded video sequence.

With reference to the first aspect, in an eighth possible implementation manner, the to-be-coded information group is one of the following video coding units: a picture, a slice, a tile, and a frame.

With reference to the first aspect, in a ninth possible implementation manner, the generating a redundant information group corresponding to the to-be-coded information group includes:
determining to-be-used-for-reference information in the to-be-coded information group, where the to-be-used-for-reference information refers to information used for reference by another to-be-coded information group in the to-be-coded video sequence; and
generating a redundant information group corresponding to the to-be-used-for-reference information.

With reference to the first aspect, in a tenth possible implementation manner, a network abstraction layer unit type of the first information group is a non-intra random access point IRAP type.

According to a second aspect, a video data decoding method is provided, including:
determining a to-be-decoded information group in a to-be-decoded bitstream and a reference information group set, where the to-be-decoded information group includes data information and location information of the to-be-decoded information group; the to-be-decoded bitstream includes a basic information group and a redundant information group corresponding to the basic information group, and a location of the basic information group in the to-be-decoded bitstream is in front of the redundant information group; the to-be-decoded information group is a basic information group or redundant information group; and the reference information group set consists of a reference information group, and the reference information group refers to an information group generated after the data information of the to-be-decoded information group in the to-be-decoded bitstream is parsed; and
discarding the to-be-decoded information group if location information of at least one reference information group in the reference information group set is the same as the location information of the to-be-decoded information group; or
parsing the data information if location information of all reference information groups in the reference information group set is different from the location information of the to-be-decoded information group.

With reference to the second aspect, in a first possible implementation manner, the reference information group in the reference information group set includes a reference status, where the reference status includes an available reference state and an unavailable reference state; and location information of a first reference information group in the reference information group set is the same as the location information of the to-be-decoded information group; and
the discarding the to-be-decoded information group if location information of at least one reference information group in the reference information group set is the same as the location information of the to-be-decoded information group includes:
discarding the to-be-decoded information group if a reference status of the first reference information group is an available reference state.

With reference to the first possible implementation manner of the second aspect, in a second possible implementation manner, the method further includes:
parsing the data information if the reference status of the first reference information group is an unavailable reference state.

With reference to the first possible implementation manner of the second aspect, in a third possible implementation manner, the available reference state includes: a used-for-long-term-reference state and a short-term-reference state.

With reference to the second aspect, in a fourth possible implementation manner, the to-be-decoded information group is one of the following video decoding units: a picture, a slice, a tile, and a frame.

With reference to the second aspect, in a fifth possible implementation manner, a network abstraction layer unit type of the to-be-decoded information group is a non-intra random access point IRAP type.

According to a third aspect, a video data decoding method is provided, including:
determining a first to-be-decoded information group in a to-be-decoded bitstream, where the first to-be-decoded information group includes data information, attribute information, and location information of the first to-be-decoded information group, and the attribute information is used to represent that the first to-be-decoded information group is a basic information group or redundant information group;
determining a reference information group set in a case in which the attribute information represents that the first to-be-decoded information group is the redundant information group, where the reference information group set consists of a reference information group, and the reference information group refers to an information group generated after data information of a to-be-decoded information group in the to-be-decoded bitstream is parsed; and
discarding the first to-be-decoded information group if location information of at least one reference information group in the reference information group set is the same as the location information of the first to-be-decoded information group, or parsing the data information if location information of all reference information groups in the reference information group set is different from the location information of the first to-be-decoded information group.

With reference to the third aspect, in a first possible implementation manner, before the parsing the data information if location information of all reference information groups in the reference information group set is different from the location information of the first to-be-decoded information group, the method further includes:
determining a second to-be-decoded information group in the to-be-decoded bitstream;
decoding the second to-be-decoded information group; and
updating the reference information group set after the second to-be-decoded information group is decoded; and
the parsing the data information includes:
   parsing the data information if location information of all reference information groups in an updated reference information group set is different from the location information of the first to-be-decoded information group.

With reference to the first possible implementation manner of the third aspect, in a second possible implementation manner, the method further includes:
discarding the first to-be-coded information group if location information of at least one reference information group in the updated reference information group set is the same as the location information of the first to-be-decoded information group.
With reference to the third aspect, in a third possible implementation manner, the reference information group in the reference information group set includes a reference status, where the reference status includes an available reference state and an unavailable reference state; and location information of a first reference information group in the reference information group set is the same as the location information of the first to-be-decoded information group; and
the discarding the first to-be-decoded information group if location information of at least one reference information group in the reference information group set is the same as the location information of the first to-be-decoded information group includes:
   discarding the first to-be-decoded information group if a reference status of the first reference information group is an available reference state.

With reference to the third possible implementation manner of the third aspect, in a fourth possible implementation manner, the method further includes:
parsing the data information if the reference status of the first reference information group is an unavailable reference state.

With reference to the third aspect, in a fifth possible implementation manner, the attribute information of the first to-be-decoded information group is located in a network abstraction layer unit header of the first to-be-decoded information group.

With reference to the third possible implementation manner of the third aspect, in a sixth possible implementation manner, the available reference state includes: a used-for-long-term-reference state and a short-term-reference state.

With reference to the third aspect, or any one of the first to sixth possible implementation manners of the third aspect, in a seventh possible implementation manner, the attribute information of the first to-be-decoded information group represents that the first to-be-decoded information group is a redundant information group, and the first to-be-decoded information group further includes a network abstraction layer unit type of a basic information group corresponding to the first to-be-decoded information group; and
after the parsing the data information in a case in which location information of all reference information groups in the reference information group set is different from the location information of the first to-be-decoded information group, the method further includes:
replacing the network abstraction layer unit type with the network abstraction layer unit type of the basic information group corresponding to the first to-be-decoded information group.

With reference to the seventh possible implementation manner of the third aspect, in an eighth possible implementation manner, the network abstraction layer unit type of the basic information group corresponding to the first to-be-decoded information group is located in a side information set of the first to-be-decoded information group.

With reference to the third aspect, in a ninth possible implementation manner, the first to-be-decoded information group is one of the following video decoding units: a picture, a slice, a tile, and a frame.

With reference to the third aspect, in a tenth possible implementation manner, a network abstraction layer unit type of the first to-be-decoded information group is a non-intra random access point IRAP type.

According to a fourth aspect, a video data coding apparatus is provided, including:
a determining unit, configured to determine a to-be-coded information group in a to-be-coded video sequence, where the to-be-coded information group includes first to-be-coded data;
a generation unit, configured to generate a redundant information group corresponding to the to-be-coded information group, where the redundant information group includes second to-be-coded data, and location information of the redundant information group is the same as location information of the to-be-coded information group in the to-be-coded video sequence;
a first coding unit, configured to code the first to-be-coded data and the location information to generate a first information group; and
a second coding unit, configured to code the second to-be-coded data and the location information to generate a second information group.

With reference to the fourth aspect, in a first possible implementation manner, the second coding unit is specifically configured to: when a reference information group set includes the first information group, code the second to-be-coded data and the location information to generate the second information group, where the reference information group set consists of a reference information group, and the reference information group refers to an information group generated after the to-be-coded information group in the to-be-coded video sequence is coded.

With reference to the fourth aspect, in a second possible implementation manner, the first coding unit is specifically configured to code the first to-be-coded data, the location information, and attribute information of the first information group to generate the first information group, where the attribute information of the first information group is used to represent that the first information group is a basic information group.

With reference to the second possible implementation manner of the fourth aspect, in a third possible implementation manner, the attribute information of the first information group is located in a network abstraction layer unit header of the first information group.

With reference to the fourth aspect, in a fourth possible implementation manner, the second coding unit is specifically configured to code the second to-be-coded data, the location information, attribute information of the second information group, and a network abstraction layer unit type of the first information group to generate the second information group, where the attribute information of the second information group is used to represent that the second information group is the redundant information group.

With reference to the fourth possible implementation manner of the fourth aspect, in a fifth possible implementation manner, the attribute information of the second information group is located in a network abstraction layer unit header of the second information group.

With reference to the fourth possible implementation manner or the fifth possible implementation manner of the fourth aspect, in a sixth possible implementation manner, the network abstraction layer unit type of the first information group is located in a side information set of the second information group.

With reference to the fourth aspect, in a seventh possible implementation manner, the location information includes: a display location of the to-be-coded information group in the to-be-coded video sequence, or a coding location of the to-be-coded information group in the to-be-coded video sequence.

With reference to the fourth aspect, in an eighth possible implementation manner, the to-be-coded information group is one of the following video coding units: a picture, a slice, a tile, and a frame.

With reference to the fourth aspect, in a ninth possible implementation manner, the generation unit includes:
a determining subunit, configured to determine to-be-used-for-reference information in the to-be-coded information group, where the to-be-used-for-reference information refers to information used for reference by another to-be-coded information group in the to-be-coded video sequence; and
a generation subunit, configured to generate a redundant information group corresponding to the to-be-used-for-reference information.

With reference to the fourth aspect, in a tenth possible implementation manner, a network abstraction layer unit type of the first information group is a non-intra random access point IRAP type.

According to a fifth aspect, a video data decoding apparatus is provided, including:
a determining unit, configured to determine a to-be-decoded information group in a to-be-decoded bitstream and a reference information group set, where the to-be-decoded information group includes data information and location information of the to-be-decoded information group; the to-be-decoded bitstream includes a basic information group and a redundant information group corresponding to the basic information group, and a location of the basic information group in the to-be-decoded bitstream is in front of the redundant information group; the to-be-decoded information group is a basic information group or redundant information group; and the reference information group set consists of a reference information group, and the reference information group refers to an information group generated after the data information of the to-be-decoded information group in the to-be-decoded bitstream is parsed; and
a first processing unit, configured to discard the to-be-decoded information group if location information of at least one reference information group in the reference information group set is the same as the location information of the to-be-decoded information group; or a second processing unit, configured to parse the data information if location information of all reference information groups in the reference information group set is different from the location information of the to-be-decoded information group.

With reference to the fifth aspect, in a first possible implementation manner, the reference information group in the reference information group set includes a reference status, where the reference status includes an available reference state and an unavailable reference state; and location information of a first reference information group in the reference information group set is the same as the location information of the to-be-decoded information group; and
the first processing unit is specifically configured to discard the to-be-decoded information group if a reference status of the first reference information group is an available reference state.

With reference to the first possible implementation manner of the fifth aspect, in a second possible implementation manner, the first processing unit is further configured to parse the data information if the reference status of the first reference information group is an unavailable reference state.

With reference to the first possible implementation manner of the fifth aspect, in a third possible implementation manner, the available reference state includes: a used-for-long-term-reference state and a short-term-reference state.

With reference to the fifth aspect, in a fourth possible implementation manner, the to-be-decoded information group is one of the following video decoding units: a picture, a slice, a tile, and a frame.

With reference to the fifth aspect, in a fifth possible implementation manner, a network abstraction layer unit type of the to-be-decoded information group is a non-intra random access point IRAP type.

According to a sixth aspect, a video data decoding apparatus is provided, including:
a determining unit, configured to: determine a first to-be-decoded information group in a to-be-decoded bitstream, where the first to-be-decoded information group includes data information, attribute information, and location information of the first to-be-decoded information group, and the attribute information is used to represent that the first to-be-decoded information group is a basic information group or redundant information group; and
determine a reference information group set in a case in which the attribute information represents that the first to-be-decoded information group is the redundant information group, where the reference information group set consists of a reference information group, and the reference information group refers to an information group generated after data information of a to-be-decoded information group in the to-be-decoded bitstream is parsed; and
a first processing unit, configured to discard the first to-be-decoded information group if location information of at least one reference information group in the reference information group set is the same as the location information of the first to-be-decoded information group; or
a second processing unit, configured to parse the data information if location information of all reference information groups in the reference information group set is different from the location information of the first to-be-decoded information group.

With reference to the sixth aspect, in a first possible implementation manner, when the apparatus includes the foregoing second processing unit, the determining unit is further configured to determine a second to-be-decoded information group in the to-be-decoded bitstream;
the apparatus further includes: a decoding unit, configured to decode the second to-be-decoded information group; and
an updating unit, configured to update the reference information group set after the second to-be-decoded information group is decoded; and
the second processing unit is specifically configured to parse the data information if location information of all reference information groups in an updated reference information group set is different from the location information of the first to-be-decoded information group.

With reference to the first possible implementation manner of the sixth aspect, in a second possible implementation manner, the second processing unit is further configured to discard the first to-be-coded information group if location information of at least one reference information group in the updated reference information group set is the same as the location information of the first to-be-decoded information group.

With reference to the sixth aspect, in a third possible implementation manner, the reference information group in the reference information group set includes a reference status, where the reference status includes an available reference state and an unavailable reference state; and location information of a first reference information group in the reference information group set is the same as the location information of the first to-be-decoded information group; and
the first processing unit is specifically configured to discard the first to-be-decoded information group if a reference status of the first reference information group is an available reference state.

With reference to the third possible implementation manner of the sixth aspect, in a fourth possible implementation manner, the first processing unit is further configured to parse the data information if the reference status of the first reference information group is an unavailable reference state.

With reference to the sixth aspect, in a fifth possible implementation manner, the attribute information of the first to-be-decoded information group is located in a network abstraction layer unit header of the first to-be-decoded information group.

With reference to the third possible implementation manner of the sixth aspect, in a sixth possible implementation manner, the available reference state includes: a used-for-long-term-reference state and a short-term-reference state.

With reference to the sixth aspect, or any one of the first to sixth possible implementation manners of the sixth aspect, in a seventh possible implementation manner, the attribute information of the first to-be-decoded information group represents that the first to-be-decoded information group is a redundant information group, and the first to-be-decoded information group further includes a network abstraction layer unit type of a basic information group corresponding to the first to-be-decoded information group; and
when the apparatus includes the second processing unit, the apparatus further includes:
a replacement unit, configured to replace the network abstraction layer unit type with the network abstraction layer unit type of the basic information group corresponding to the first to-be-decoded information group.

With reference to the seventh possible implementation manner of the sixth aspect, in an eighth possible implementation manner, the network abstraction layer unit type of the basic information group corresponding to the first to-be-decoded information group is located in a side information set of the first to-be-decoded information group.

With reference to the sixth aspect, in a ninth possible implementation manner, the first to-be-decoded information group is one of the following video decoding units: a picture, a slice, a tile, and a frame.

With reference to the sixth aspect, in a tenth possible implementation manner, a network abstraction layer unit type of the first to-be-decoded information group is a non-intra random access point IRAP type.

According to the coding method and the coding apparatus in the foregoing solutions, attribute information of a first information group and attribute information of a second information group do not need to be marked; therefore, coding efficiency can be improved. According to the decoding method and the decoding apparatus in the foregoing solutions, a slice does not need to be marked as a basic slice or redundant slice in a video data coding process, and therefore, coding efficiency can be improved; or a basic slice does not need to be decoded before a redundant slice corresponding to the basic slice is decoded, that is, the basic slice needs to be transmitted before the redundant slice corresponding to the basic slice is transmitted, and therefore, transmission efficiency can be improved.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.
FIG. 1 is a flowchart of a video data coding method according to Embodiment 1 of the present invention;
FIG. 2 is a flowchart of a video data decoding method according to Embodiment 2 of the present invention;
FIG. 3 is a flowchart of another video data decoding method according to Embodiment 3 of the present invention;
FIG. 4 is a flowchart of a video data coding method according to Embodiment 1 of the present invention;
FIG. 5 is a flowchart of a video data decoding method according to Embodiment 1 of the present invention;
FIG. 6 is a flowchart of another video data decoding method according to Embodiment 1 of the present invention;
FIG. 7 is a flowchart of a video data coding method according to Embodiment 2 of the present invention;
FIG. 8 is a flowchart of a video data decoding method according to Embodiment 2 of the present invention;
FIG. 8A is a flowchart of another video data decoding method according to Embodiment 2 of the present invention;
FIG. 9 is a structural diagram of a video data coding apparatus according to Embodiment 4 of the present invention;
FIG. 10 is a structural diagram of another video data coding apparatus according to Embodiment 4 of the present invention;
FIG. 11 is a structural diagram of a video data coding apparatus according to Embodiment 5 of the present invention;
FIG. 12 is a structural diagram of a video data decoding apparatus according to Embodiment 6 of the present invention;
FIG. 13 is a structural diagram of a video data decoding apparatus according to Embodiment 7 of the present invention;
FIG. 14 is a structural diagram of a video data decoding apparatus according to Embodiment 8 of the present invention;
FIG. 15 is a structural diagram of a video data decoding apparatus according to Embodiment 8 of the present invention; and
FIG. 16 is a structural diagram of a video data decoding apparatus according to Embodiment 9 of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by persons of ordinary skill in the art based on the embodiments of the present invention without creative efforts shall fall within the protection scope of the present invention.

The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

### Embodiment 1

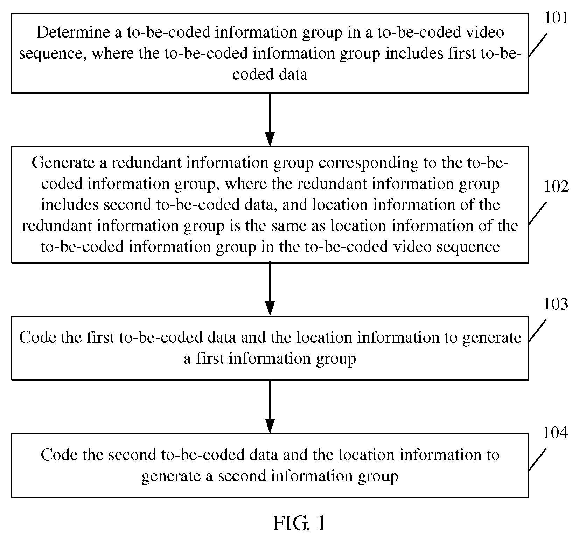

As shown in FIG. 1, FIG. 1 shows a video data coding method provided in this embodiment of the present invention. The method includes:
101: Determine a to-be-coded information group in a to-be-coded video sequence, where the to-be-coded information group includes first to-be-coded data.

Exemplarily, this embodiment may be executed by an encoder.

Some terms in this embodiment are described in the following:
(1) To-be-coded information group: An attribute is a basic information group, and one to-be-coded information group may be data that forms a part of a picture or an entire picture, or may be data that is used to predict a part of a picture or an entire picture. Optionally, the to-be-coded information group may specifically include but is not limited to one of the following video coding units: a picture, a slice, a tile, and a frame.
(2) To-be-coded video sequence: includes one or more to-be-coded information groups.
(3) Reference information group: refers to an information group generated after a to-be-coded information group in a to-be-coded video sequence is coded, for example, the following first information group or the following second information group.
(4) Reference information group set: consists of a reference information group, and may include one or more elements, or may be a null set. For example, when the to-be-coded information group in step 101 is the first information group in the to-be-coded video sequence, the reference information group set is a null set. In addition, generally, a specific limitation is imposed on a capacity of the reference information group set; when the reference information group set includes excessive reference information groups, in chronological order of coding, an encoder removes, from the reference information group set, a reference information group that is first obtained by means of coding. In this embodiment of the present invention, no limitation is imposed on the capacity. In addition, in order to clearly and briefly describe the technical solution of this embodiment of the present invention, an action of "removing a reference information group from a reference information group set" is not described in any of the following embodiments.

102: Generate a redundant information group corresponding to the to-be-coded information group, where the redundant information group includes second to-be-coded data, and location information of the redundant information group is the same as location information of the to-be-coded information group in the to-be-coded video sequence.

The first to-be-coded data may be the same as or different from the second to-be-coded data. Optionally, the location information is one of the following pieces of information: a display location of the to-be-coded information group in the to-be-coded video sequence, or a coding location of the to-be-coded information group in the to-be-coded video sequence, which is not limited thereto certainly, where the display location of the to-be-coded information group in the to-be-coded video sequence may be a POC (picture order count, picture order count).

Exemplarily, step 102 may be implemented by using a prior-art method, and details are not described herein again. It should be noted that all information in the to-be-coded information group may be used to generate a redundant information group, or only information that is used for reference by another to-be-coded information group and that is in the to-be-coded information group may be used to generate a redundant information group; the latter can reduce a volume of transmitted data, thereby improving system performance.

In an embodiment of the present invention, step 102 may include: determining to-be-used-for-reference information in the to-be-coded information group, where the to-be-used-for-reference information refers to information used for reference by another to-be-coded information group in the to-be-coded video sequence; and generating a redundant information group corresponding to the to-be-used-for-reference information.

Exemplarily, assuming that a to-be-used-for-reference information group is a frame, step 102 may be specifically implemented as: the N^{th} frame is a reference frame of the (N + 1)^{th} frame, and the N^{th} frame is coded; the (N + 1)^{th} frame is coded, where code blocks in the (N + 1)^{th} frame are coded successively, an optimal reference block in the N^{th} frame can be obtained for each code block, and a location of each optimal reference block is recorded; and a redundant frame corresponding to the N^{th} frame is coded, where only a code block marked as an optimal reference block is coded, and the other code blocks are filled in with null data.

103: Code the first to-be-coded data and the location information to generate a first information group.

In an embodiment of the present invention, step 103 may specifically include: coding the first to-be-coded data, the location information, and attribute information of the first information group to generate the first information group, where the attribute information of the first information group is used to represent that the first information group is a basic information group. Optionally, the attribute information of the first information group is located in a NALU (Network Abstract Layer Unit, network abstraction layer unit) header of the first information group.

During specific implementation, the NALU header of the first information group may further include a NALU type of the first information group, which may be specifically: RADL (random access decodable leading, random access decodable leading), RASL (random access skipped leading, random access skipped leading), BLA (broken link access, broken link access), IDR (instantaneous decoding refresh, instantaneous decoding refresh), or CRA (clean random access, clean random access), where the BLA/IDR/CRA is collectively referred to as an IRAP.

104: Code the second to-be-coded data and the location information to generate a second information group.

Exemplarily, the coding methods in step 103 and step 104 may be implemented by using a prior-art method. For example, coding is performed according to RTP or the like.

It should be noted that during specific implementation, step 103 may be first performed and then step 104 is performed, or step 104 may be first performed and then step 103 is performed. Further, coding of another to-be-coded information group in the to-be-coded video sequence may be further performed between step 103 and step 104, that is, a same to-be-coded information group and a redundant information group corresponding to the to-be-coded information group may be coded consecutively, or may be coded inconsecutively.

In order to ensure that the coding method may be applied to the following video data decoding method, optionally, step 104 may include: when a reference information group set includes the first information group, coding the second to-be-coded data and the location information to generate the second information group, where the reference information group set consists of a reference information group, and the reference information group refers to an information group generated after the to-be-coded information group in the to-be-coded video sequence is coded. In this way, it can be avoided that a coding location of the first information group is excessively far away from a coding location of the second information group and consequently, a basic information group corresponding to a to-be-decoded information group has been removed from the reference information group set when it is determined that the to-be-decoded information group is a redundant information group.

In an embodiment of the present invention, step 104 may specifically include: coding the second to-be-coded data, the location information, attribute information of the second information group, and a network abstraction layer unit type of the first information group to generate the second information group, where the attribute information of the second information group is used to represent that the second information group is the redundant information group. Optionally, the attribute information of the second information group is located in a network abstraction layer unit header of the second information group. Optionally, the network abstraction layer unit type of the first information group is located in a side information set of the second information group. Specifically, when the to-be-coded information group is a frame, picture, or slice, the side information set may be specifically a slice header; when the to-be-coded information group is a tile, the side information set may be specifically a tile header.

It should be noted that the attribute information of the second information group may be used as a NALU type ("redundant type" in the following content) of the second information group, or may be independently used as an attribute in a NALU header of the second information group. The former is used as an example for description in the following embodiments. Correspondingly, the attribute information of the first information group may be implicit in the NALU type of the first information group, or may be independently used as an attribute in the NALU header of the first information group. The former may be specifically implemented as: when a NALU type of an information group is not a redundant type, it is deemed that the information group is a basic information group. The former is used as an example for description in the following embodiments.

Further, one NAL unit (that is, NALU) may include a part of one frame, one frame, or multiple frames. An example in which "one NAL unit includes one frame, one frame includes one slice, and a to-be-coded information group is a frame" is used for description in the following. After a to-be-coded information group is coded according to the method provided in this embodiment, two NAL units may be generated, where one NAL unit is a basic information group, and the other NAL unit is a redundant information group. Using the to-be-coded information group in step 101 to step 104 as an example, the two generated NAL units are respectively the first information group and the second information group. The NAL unit includes a NALU header and NALU data, the NALU data includes a slice header and slice data, and the slice data includes the foregoing "data information".

A coded bitstream (including one or more reference information groups) is generated after the to-be-coded video sequence is coded, and becomes a to-be-decoded bitstream of a decoder after being transmitted in a network. During specific implementation, the encoder may transmit the generated coded bitstream to the decoder after some or all of to-be-coded information groups in the to-be-coded video sequence are coded.

It should be noted that the video data coding method provided in this embodiment of the present invention may be used together with a prior-art video data coding method, which may be specifically described as: a redundant information group is configured for some to-be-coded information groups in the to-be-coded video sequence, and no redundant information group is configured for the other to-be-coded information groups. That is, a redundant information group corresponding to some to-be-coded information groups is generated, and no redundant information group corresponding to the other to-be-coded information groups is generated. Optionally, no redundant information group may be configured for a to-be-coded information group whose NALU type is an IRAP (Intra random access point, Intra random access point) type, where specifically, a network abstraction layer unit type of the first information group is a non-IRAP type. Certainly, a redundant information group may be further configured for each to-be-coded information group in the to-be-coded video sequence.

According to the video data coding method provided in this embodiment of the present invention, a redundant information group that includes second to-be-coded data and is corresponding to a to-be-coded information group is generated; first to-be-coded data included in the to-be-coded information group and location information of the to-be-coded information group in a to-be-coded video sequence are coded to generate a first information group; and the second to-be-coded data and location information of the redundant information group are coded to generate a second information group, where the location information of the redundant information group is the same as the location information of the to-be-coded information group. In this solution, coding is performed without the need of marking attribute information of the first information group and attribute information of the second information group; therefore, coding efficiency can be improved.

### Embodiment 2

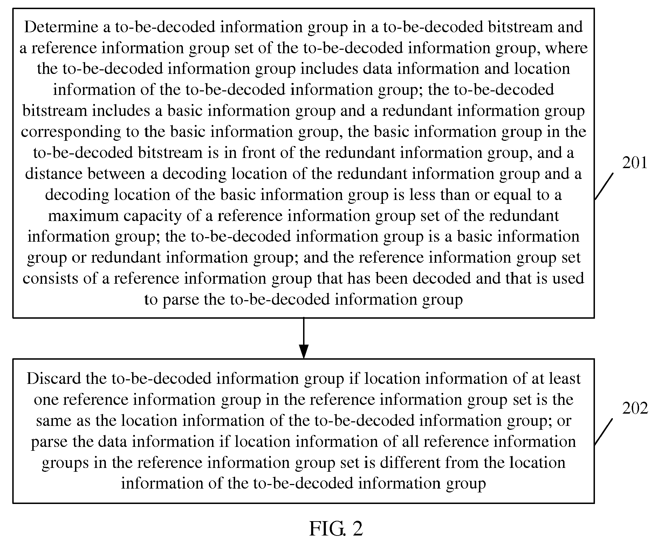

A video data decoding method provided in this embodiment is corresponding to the foregoing video data coding method. As shown in FIG. 2, the video data decoding method includes:
201: Determine a to-be-decoded information group in a to-be-decoded bitstream and a reference information group set, where the to-be-decoded information group includes data information and location information of the to-be-decoded information group; the to-be-decoded bitstream includes a basic information group and a redundant information group corresponding to the basic information group, and a location of the basic information group in the to-be-decoded bitstream is in front of the redundant information group; the to-be-decoded information group is a basic information group or redundant information group; and the reference information group set consists of a reference information group, and the reference information group refers to an information group generated after the data information of the to-be-decoded information group in the to-be-decoded bitstream is parsed.

Exemplarily, this embodiment may be executed by a decoder.

Some terms in this embodiment are described in the following:
(1) To-be-decoded information group: An attribute of the to-be-decoded information group is a basic information group or redundant information group; the to-be-decoded information group may be specifically the first information group or second information group in Embodiment 1. Optionally, the to-be-decoded information group is one of the following video decoding units: a picture, a slice, a tile, and a frame.
(2) To-be-decoded bitstream: A coded bitstream is generated after the to-be-coded video sequence in Embodiment 1 is coded, and becomes the to-be-decoded bitstream in a decoder after being transmitted in a network, where a packet loss may occur in the transmission process, and the to-be-decoded bitstream includes one or more to-be-decoded information groups.
(3) Reference information group: refers to an information group generated after data information of a to-be-decoded information group in a to-be-decoded bitstream is parsed.
(4) Reference information group set: consists of a reference information group, and may include one or more elements, or may be a null set. For example, when the to-be-decoded information group in step 201 is the first information group in the to-be-decoded bitstream, the reference information group set is a null set. Exemplarily, an information group in the reference information group set may be data in a DPB (Decoded Picture Buffer, decoded picture buffer) (referred to as "DPB data" in the following content), or may be data in an RPS (Reference Picture Set, reference picture set). In addition, generally, a specific limitation is imposed on a capacity of the reference information group set; when the reference information group set includes excessive reference information groups, in chronological order of decoding, the decoder removes, from the reference information group set, a reference information group that is first obtained by means of decoding. In this embodiment of the present invention, no limitation is imposed on the capacity. In addition, in order to clearly and briefly describe the technical solution of this embodiment of the present invention, an action of "removing a reference information group from a reference information group set" is not described in any of the following embodiments.
(5) Data information: When a to-be-decoded information group is a basic information group, the "data information" may be information generated after the "first to-be-coded data" in Embodiment 1 is coded; when the to-be-decoded information group is a redundant information group, the "data information" may be information generated after the "second to-be-coded data" in Embodiment 1 is coded.
(6) Location information of a to-be-decoded information group: is a location of a to-be-coded information group in a to-be-decoded bitstream, which, during specific implementation, generally refers to a display location or coding location of the to-be-decoded information group in the to-be-coded video sequence before the to-be-decoded information group is coded, that is, when the to-be-decoded information group is the to-be-coded information group. The display location of the to-be-coded information group in the to-be-coded video sequence may be a POC.
(7) That a location of a basic information group in a to-be-decoded bitstream is in front of the redundant information group may be specifically implemented as: in a coding process, a basic information group corresponding to the redundant information group is coded before the redundant information group is coded; in a transmission process, a coded bitstream is transmitted in coding order, or information used for representing a coding sequence, such as, a timestamp, is added to a packet header before packaging and transmission.

202: Discard the to-be-decoded information group if location information of at least one reference information group in the reference information group set is the same as the location information of the to-be-decoded information group; or parse the data information if location information of all reference information groups in the reference information group set is different from the location information of the to-be-decoded information group.

Exemplarily, in this embodiment, the location of the basic information group in the to-be-decoded bitstream is in front of the redundant information group corresponding to the basic information group, and it can be learnt from Embodiment 1 that location information of the basic information group is the same as location information of the redundant information group; therefore, the following may be obtained:
(A) That "Location information of at least one reference information group in the reference information group set is the same as the location information of the to-be-decoded information group" indicates: the at least one reference information group in the reference information group set is a basic information group corresponding to the to-be-decoded information group or another redundant information group of a basic information group corresponding to the decoded information group, and the to-be-coded information group is a redundant information group. Therefore, that the to-be-decoded information group may be discarded is specifically: parsing of the data information of the to-be-decoded information group stops; in addition, the to-be-decoded information group may be further deleted.
(B) That "Location information of all reference information groups in the reference information group set is different from the location information of the to-be-decoded information group" indicates: the to-be-coded information group is a basic information group, or the to-be-decoded information group is a redundant information group, but a basic information group corresponding to the redundant information group is lost. Therefore, in this case, parsing of the data information of the to-be-decoded information group needs to be continued.

In an embodiment of the present invention, the reference information group in the reference information group set includes a reference status, where the reference status includes an available reference state and an unavailable reference state; and location information of a first reference information group in the reference information group set is the same as the location information of the to-be-decoded information group. In this case, the discarding the to-be-decoded information group if location information of at least one reference information group in the reference information group set is the same as the location information of the to-be-decoded information group may specifically include: discarding the to-be-decoded information group if a reference status of the first reference information group is an available reference state. Optionally, in this case, the method may further include: parsing the data information if the reference status of the first reference information group is an unavailable reference state.

Exemplarily, the decoder may exchange information with an encoder to obtain a reference status of a reference information group. For a specific information exchange process, reference may be made to the prior art, and details are not described herein again. The reference status of the reference information group is determined according to a NALU type of the to-be-coded information group, a coding structure, and the like, where the coding structure includes: a GOP (Group Of Picture, group of picture) type, and is manually set on the encoder.

No limitation is imposed on a specific subdivision of the reference status, for example, the available reference state may include: a used-for-long-term-reference state and a short-term-reference state. Specifically, if a distance between a decoding location corresponding to the first reference information group and a decoding location of the to-be-decoded information group is less than a threshold, the first reference information group is a short-term reference information group of the to-be-decoded information group; if the distance between the decoding location corresponding to the first reference information group and the decoding location of the to-be-decoded information group is greater than the threshold, the first reference information group is a long-term reference information group of the to-be-decoded information group. In addition, if the distance between the decoding location corresponding to the first reference information group and the decoding location of the to-be-decoded information group is equal to the threshold, the first reference information group may be referred to as a short-term reference information group of the to-be-decoded information group, or may be referred to as a long-term reference information group of the to-be-decoded information group. The value may be 16 frames or another value.

Optionally, corresponding to Embodiment 1, a network abstraction layer unit type of the to-be-decoded information group may be a non-IRAP type.

According to the video data decoding method provided in this embodiment, a to-be-decoded information group in a to-be-decoded bitstream includes data information and location information of the to-be-decoded information group; and the to-be-decoded information group is discarded if location information of at least one reference information group in a reference information group set of the to-be-decoded information group is the same as the location information of the to-be-decoded information group, or the data information is parsed if location information of all reference information groups in a reference information group set of the to-be-decoded information group is the same as the location information of the to-be-decoded information group, where a first to-be-decoded information group may be a slice. Compared with a video data decoding method provided in the prior art, in this solution, a slice does not need to be marked as a basic slice or redundant slice in a video data coding process; therefore, coding efficiency can be improved.

### Embodiment 3

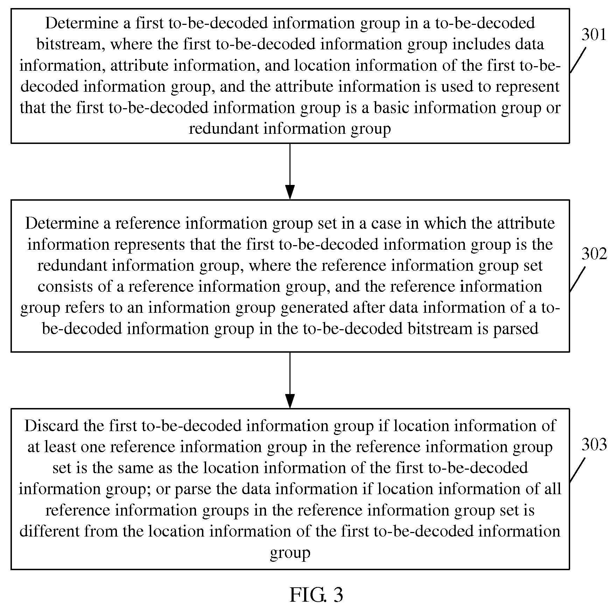

A video data decoding method provided in this embodiment is corresponding to the foregoing video data coding method. As shown in FIG. 3, the video data decoding method includes:
301: Determine a first to-be-decoded information group in a to-be-decoded bitstream, where the first to-be-decoded information group includes data information, attribute information, and location information of the first to-be-decoded information group, and the attribute information is used to represent that the first to-be-decoded information group is a basic information group or redundant information group.

Exemplarily, this embodiment may be executed by a decoder. For an explanation of related content in this embodiment, reference may be made to Embodiment 2, and details are not described herein again. The "first to-be-decoded information group" refers to a to-be-decoded information group in a to-be-decoded bitstream, and the following "second to-be-decoded information group" refers to one or more to-be-decoded information groups after the first to-be-decoded information group.

Optionally, the attribute information of the first to-be-decoded information group is located in a network abstraction layer unit header of the first to-be-decoded information group. It should be noted that when the attribute information of the first to-be-decoded information group is used to represent that the first to-be-decoded information group is a basic information group, the attribute information may be implicit in a NALU type of the to-be-decoded information group, or may be independently used as an attribute in a NALU header. The former is used as an example for description in the following specific embodiments. When the attribute information of the first to-be-decoded information group is used to represent that the to-be-decoded information group is a redundant information group, the attribute information may be used as a NALU type (a "redundant type" in the following content) of the first to-be-decoded information group, or may be independently used as an attribute in a NALU header. The former may be specifically implemented as: when a NALU type of an information group is not a redundant type, it is deemed that the information group is a basic information group. The former is used as an example for description in the following specific embodiments.

Optionally, the first to-be-decoded information group is one of the following video decoding units: a picture, a slice, a tile, and a frame.

302: Determine a reference information group set in a case in which the attribute information represents that the first to-be-decoded information group is the redundant information group, where the reference information group set consists of a reference information group, and the reference information group refers to an information group generated after data information of a to-be-decoded information group in the to-be-decoded bitstream is parsed.

Exemplarily, the to-be-decoded information group in this embodiment includes attribute information, and it can be learnt, through parsing of the attribute information, whether the to-be-decoded information group is a redundant information group or basic information group. When the attribute information is used as a NALU type or is implicit in a NALU type, because a NALU type of an information group is located in a NALU header of the information group, it may also be described as: it can be learnt, through parsing of a NALU header of the to-be-decoded information group, whether the to-be-decoded information group is a redundant information group or basic information group.

303: Discard the first to-be-decoded information group if location information of at least one reference information group in the reference information group set is the same as the location information of the first to-be-decoded information group; or parse the data information if location information of all reference information groups in the reference information group set is different from the location information of the first to-be-decoded information group.

Exemplarily, it can be learnt from Embodiment 1 that location information of the basic information group is the same as location information of the redundant information group. Therefore, the following can be obtained:
(A) That "Location information of at least one reference information group in the reference information group set is the same as the location information of the first to-be-decoded information group" indicates: the reference information group set includes a basic information group corresponding to the first to-be-decoded information group (the redundant information group), and the basic information group is not lost. Therefore, that the first to-be-decoded information group may be discarded is specifically: parsing of the data information of the first to-be-decoded information group stops; in addition, the to-be-coded information group may be further deleted.
(B) In this embodiment, it is deemed that in a case in which "location information of all reference information groups in the reference information group set is different from the location information of the first to-be-decoded information group", a basic information group corresponding to the first to-be-decoded information group is lost; therefore, the data information of the first to-be-decoded information group needs to be parsed.

Further, the method may further include: parsing a composition of a reference information group of the first to-be-decoded information group in a case in which the attribute information represents that the first to-be-decoded information group is a basic information group.

In an embodiment of the present invention, before the parsing the data information if location information of all reference information groups in the reference information group set is different from the location information of the first to-be-decoded information group, the method further includes: determining a second to-be-decoded information group in the to-be-decoded bitstream; decoding the second to-be-decoded information group; and updating the reference information group set after the second to-be-decoded information group is decoded. In this case, the parsing the data information includes: parsing the data information if location information of all reference information groups in an updated reference information group set is different from the location information of the first to-be-decoded information group. In addition, the method may further include: discarding the first to-be-coded information group if location information of at least one reference information group in the updated reference information group set is the same as the location information of the first to-be-decoded information group.

Exemplarily, in this embodiment, one or more to-be-decoded information groups after the first to-be-decoded information group may be decoded in a case in which location information of all reference information groups in the reference information group set is different from the location information of the first to-be-decoded information group, so as to update the reference information group set. For a method for decoding the second to-be-decoded information group, reference may be made to FIG. 3. During specific implementation, a quantity of second to-be-coded information groups may be determined according to an actual scenario and experience, and no limitation is imposed thereon in this embodiment of the present invention.

In an embodiment of the present invention, the reference information group in the reference information group set includes a reference status, where the reference status includes an available reference state and an unavailable reference state; and location information of a first reference information group in the reference information group set is the same as the location information of the first to-be-decoded information group. In this case, the discarding the first to-be-decoded information group if location information of at least one reference information group in the reference information group set is the same as the location information of the first to-be-decoded information group includes: discarding the first to-be-decoded information group if a reference status of the first reference information group is an available reference state.

Optionally, in this case, the method further includes: parsing the data information if the reference status of the first reference information group is an unavailable reference state. Optionally, the available reference state includes: a used-for-long-term-reference state and a short-term-reference state.

In an embodiment of the present invention, the attribute information of the first to-be-decoded information group represents that the first to-be-decoded information group is a redundant information group, and the first to-be-decoded information group further includes a network abstraction layer unit type of a basic information group corresponding to the first to-be-decoded information group. After the parsing the data information in a case in which location information of all reference information groups in the reference information group set is different from the location information of the first to-be-decoded information group, the method further includes: replacing the network abstraction layer unit type with the network abstraction layer unit type of the basic information group corresponding to the first to-be-decoded information group.

Exemplarily, during specific implementation, after the replacing the network abstraction layer unit type with the network abstraction layer unit type of the basic information group corresponding to the first to-be-decoded information group, the method may further include: executing a corresponding operation according to the new network abstraction unit type, for example, when the new network abstraction unit type is an IDR (instantaneous decoding refresh frame) type, an operation of emptying a decoded picture buffer is executed.

Optionally, the network abstraction layer unit type of the basic information group corresponding to the first to-be-decoded information group is located in a side information set of the first to-be-decoded information group. Specifically, when the to-be-coded information group is a frame, picture, or slice, the side information set may be specifically a slice header; when the to-be-coded information group is a tile, the side information set may be specifically a tile header.

Optionally, a network abstraction layer unit type of the first to-be-decoded information group is a non-IRAP type.

According to the video data decoding method provided in this embodiment, a first to-be-decoded information group in a to-be-decoded bitstream includes data information, attribute information, and location information of the first to-be-decoded information group; and in a case in which the attribute information represents that the first to-be-decoded information group is a redundant information group, the first to-be-decoded information group is discarded if location information of at least one reference information group in a reference information group set of the first to-be-decoded information group is the same as the location information of the first to-be-decoded information group, or the data information is parsed if location information of all reference information groups in a reference information group set of the first to-be-decoded information group is different from the location information of the first to-be-decoded information group, where the first to-be-decoded information group may be a slice. Compared with a video data decoding method provided in the prior art, in this solution, a basic slice does not need to be decoded before a redundant slice corresponding to the basic slice is decoded, that is, the basic slice needs to be transmitted before the redundant slice corresponding to the basic slice is transmitted; therefore, transmission flexibility can be improved.

The foregoing coding and decoding methods are described by using the following several specific embodiments. A to-be-coded information group is a slice; location information of the to-be-coded information group in a to-be-coded video sequence is a POC of the to-be-coded information group; and a NALU type of the to-be-coded information group is a non-IRAP type. A to-be-decoded information group is a slice; location information of the to-be-decoded information group is a POC of a to-be-coded information group corresponding to the to-be-decoded information group; and a NALU type of the to-be-decoded information group is a non-IRAP type.

### Embodiment 1

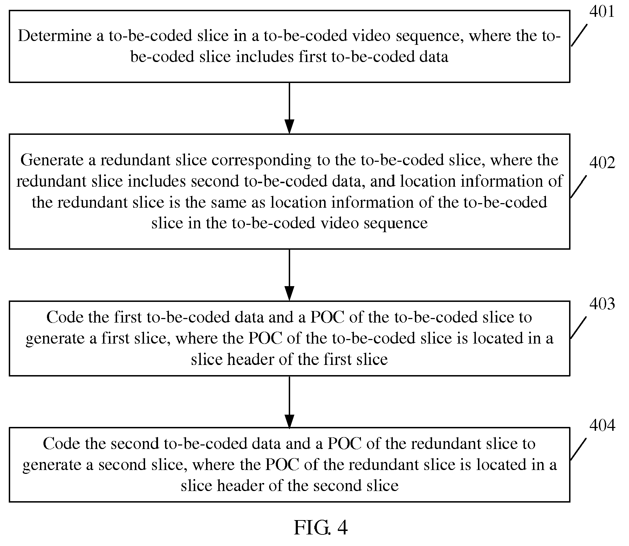

As shown in FIG. 4, a coding method includes:
401: Determine a to-be-coded slice in a to-be-coded video sequence, where the to-be-coded slice includes first to-be-coded data.
402: Generate a redundant slice corresponding to the to-be-coded slice, where the redundant slice includes second to-be-coded data, and location information of the redundant slice is the same as location information of the to-be-coded slice in the to-be-coded video sequence.
403: Code the first to-be-coded data and a POC of the to-be-coded slice to generate a first slice, where the POC of the to-be-coded slice is located in a slice header of the first slice.

Exemplarily, information generated after the first to-be-coded data is coded is data information of the first slice. Step 403 may be performed before step 402, or may be performed after step 402, or step 403 and step 402 may also be performed simultaneously.

404: Code the second to-be-coded data and a POC of the redundant slice to generate a second slice, where the POC of the redundant slice is located in a slice header of the second slice.

Exemplarily, the POC of the redundant slice is the same as the POC of the first to-be-coded slice. Information generated after the second to-be-coded data is coded is data information of the second slice. Step 404 may be performed before step 403, or may be performed after step 403, or step 404 and step 403 may also be performed simultaneously.

It should be noted that during specific implementation, each to-be-coded slice in the to-be-coded video sequence may be coded according to step 401 to step 404; or some to-be-coded slices in the to-be-coded video sequence may be coded according to step 401 to step 404, and also, the other to-be-coded slices in the to-be-coded video sequence are coded according to step 401 and step 403.

To perform coding according to the video data coding method shown FIG. 4, a basic slice needs to be first transmitted and then a redundant slice corresponding to the basic slice is transmitted; or before packaging and transmission, information used to represent a coding sequence, such as, a timestamp, is added to a packet header, so as to ensure that a location of the basic slice that is in a to-be-decoded bitstream and that is received by a decoder is in front of the redundant slice corresponding to the basic slice.

The following provides two video data decoding methods in a decoder after coding is performed according to the video data coding method shown in FIG. 4. It should be noted that reference information groups in the following two decoding methods are DPB data.

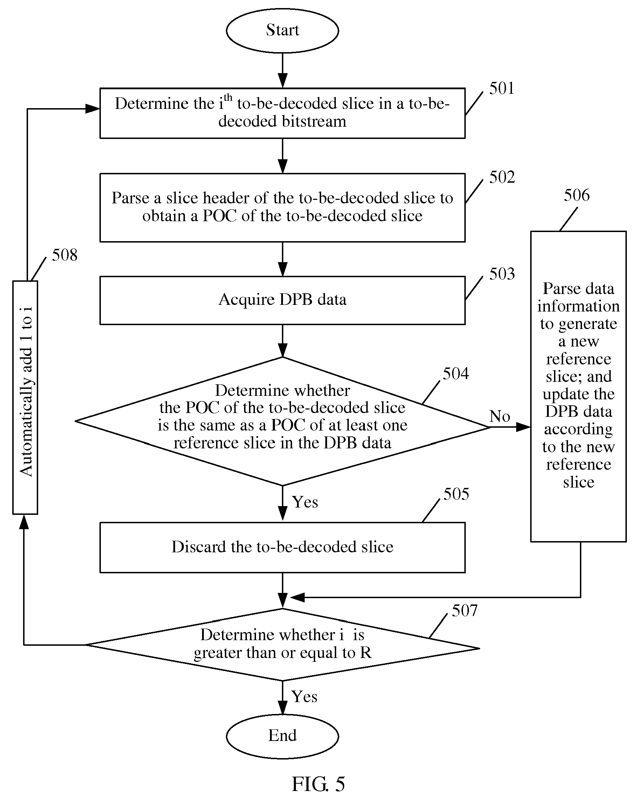

As shown in FIG. 5, Decoding method 1 includes:
501: Determine the i^{th} to-be-decoded slice in a to-be-decoded bitstream, where the to-be-decoded slice includes data information and a POC of the to-be-decoded slice, and the POC of the to-be-decoded slice is located in a slice header.

Exemplarily, assuming that there are totally R to-be-decoded slices in the to-be-decoded bitstream in this embodiment, i ≤ R, both i and R are values greater than 0, and an initial value of i is 1.

502: Parse the slice header of the to-be-decoded slice to obtain the POC of the to-be-decoded slice.

503: Acquire DPB data, where the DPB data includes zero, one, or multiple reference slices.

504: Determine whether the POC of the to-be-decoded slice is the same as a POC of at least one reference slice in the DPB data.

If yes, step 505 is performed; if not, step 506 is performed.

505: Discard the to-be-decoded slice.

Step 507 is performed after step 505.

506: Parse the data information to generate a new reference slice; and update the DPB data according to the new reference slice.

507: Determine whether i is greater than or equal to R.

If yes, the process ends; if not, step 508 is performed.

508: Automatically add 1 to i.

Step 501 is performed after step 508.

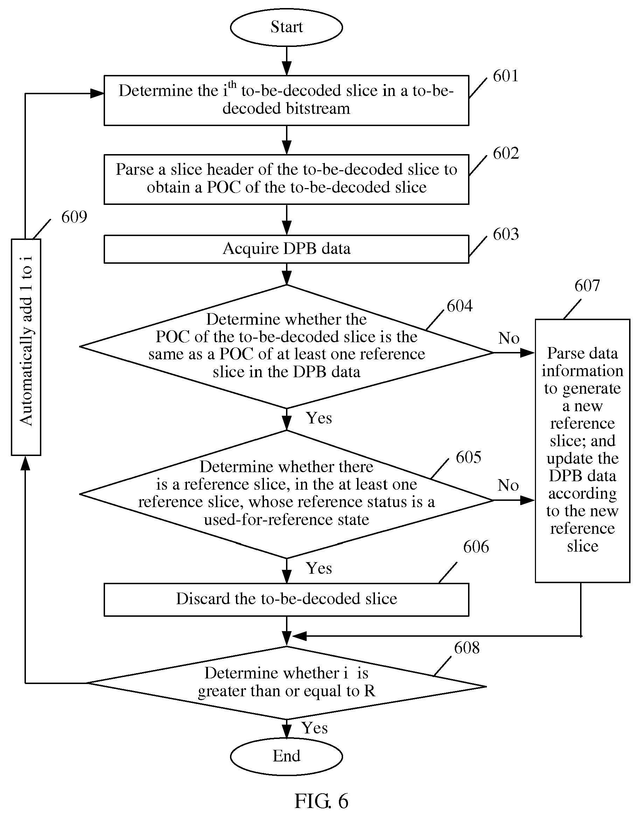

As shown in FIG. 6, Decoding method 2 includes:
601: Determine the i^{th} to-be-decoded slice in a to-be-decoded bitstream, where the to-be-decoded slice includes data information and a POC of the to-be-decoded slice, and the POC of the to-be-decoded slice is located in a slice header.

Exemplarily, assuming that there are totally R to-be-decoded slices in the to-be-decoded bitstream in this embodiment, i ≤ R, both i and R are values greater than 0, and an initial value of i is 1.

602: Parse the slice header of the to-be-decoded slice to obtain the POC of the to-be-decoded slice.

603: Acquire DPB data, where the DPB data includes zero, one, or multiple reference slices, each reference slice is corresponding to one reference status, and the reference status includes an available reference state and an unavailable reference state.

604: Determine whether the POC of the to-be-decoded slice is the same as a POC of at least one reference slice in the DPB data.

If yes, step 605 is performed; if not, step 607 is performed.

605: Determine whether there is a reference slice, in the at least one reference slice, whose reference status is an available reference state.

If yes, step 606 is performed; if not, step 607 is performed.

606: Discard the to-be-decoded slice.

Step 608 is performed after step 606 is performed.

607: Parse the data information to generate a new reference slice; and update the DPB data according to the new reference slice.

608: Determine whether i is greater than or equal to R.

If yes, the process ends; if not, step 609 is performed.

609: Automatically add 1 to i.

Step 601 is performed after step 609.

According to the video data coding and decoding methods provided in this embodiment, a to-be-coded slice does not need to be marked as a basic slice or redundant slice in a video data coding process; therefore, coding efficiency can be improved.

### Embodiment 2

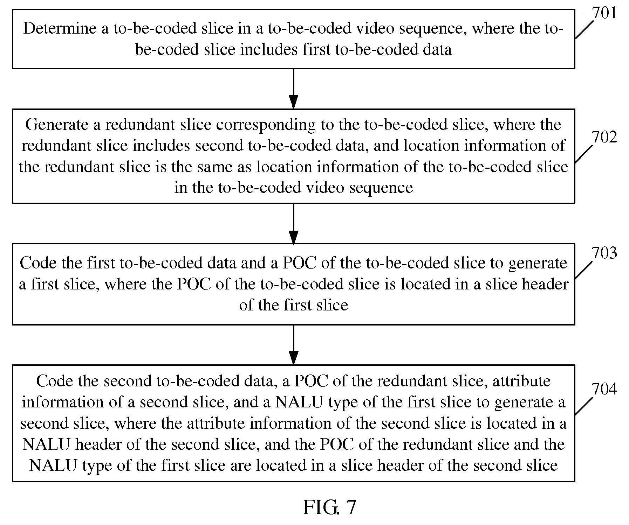

As shown in FIG. 7, a coding method includes:
701: Determine a to-be-coded slice in a to-be-coded video sequence, where the to-be-coded slice includes first to-be-coded data.
702: Generate a redundant slice corresponding to the to-be-coded slice, where the redundant slice includes second to-be-coded data, and location information of the redundant slice is the same as location information of the to-be-coded slice in the to-be-coded video sequence.
703: Code the first to-be-coded data and a POC of the to-be-coded slice to generate a first slice, where the POC of the to-be-coded slice is located in a slice header of the first slice.

Exemplarily, information generated after the first to-be-coded data is coded is data information of the first slice. Step 703 may be performed before step 702, or may be performed after step 702, or step 703 and step 702 may also be performed simultaneously.

704: Code the second to-be-coded data, a POC of the redundant slice, attribute information of a second slice, and a NALU type of the first slice to generate a second slice, where the attribute information of the second slice is located in a NALU header of the second slice, and the POC of the redundant slice and the NALU type of the first slice are located in a slice header of the second slice.

Exemplarily, the attribute information of the second slice is used to represent that the second slice is a redundant slice. The POC of the redundant slice is the same as the POC of the first to-be-coded slice. Information generated after the second to-be-coded data is coded is data information of the second slice. Step 704 may be performed before step 703, or may be performed after step 703, or step 704 and step 703 may also be performed simultaneously.

It should be noted that during specific implementation, each to-be-coded slice in the to-be-coded video sequence may be coded according to step 701 to step 704; or some to-be-coded slices in the to-be-coded video sequence may be coded according to step 701 to step 704, and also, the other to-be-coded slices in the to-be-coded video sequence are coded according to step 701 and step 703.

In addition, it should be noted that in this embodiment, the attribute information of the second slice is used as a NALU type of the second slice, which is referred to as a redundant type (RDN_NUT) in the following content. Therefore, step 704 may be described as: Code the second to-be-coded data, the POC of the redundant slice, the NALU type of the second slice, and the NALU type of the first slice, where the NALU type of the second slice is a redundant type and is used to represent that the second slice is a redundant slice.

During specific implementation, a reserved bit RSV_VCL24 in the NALU header may be used to mark a redundant type. Table 1 shows a manner of defining a redundant type.

**Table 1**

| NALU type | NALU type name | Content included in a NAL unit and a syntactic structure applicable to the NAL unit | Coding manner |
|---|---|---|---|
| 24 | RDN_N UT | Field for coding a redundant picture | VCL |

VCL refers to a coding manner at a video coding layer (video coding layer).

The following provides two video data decoding methods in a decoder after coding is performed according to the video data coding method shown in FIG. 7. It should be noted that reference information groups in the following decoding methods are DPB data.

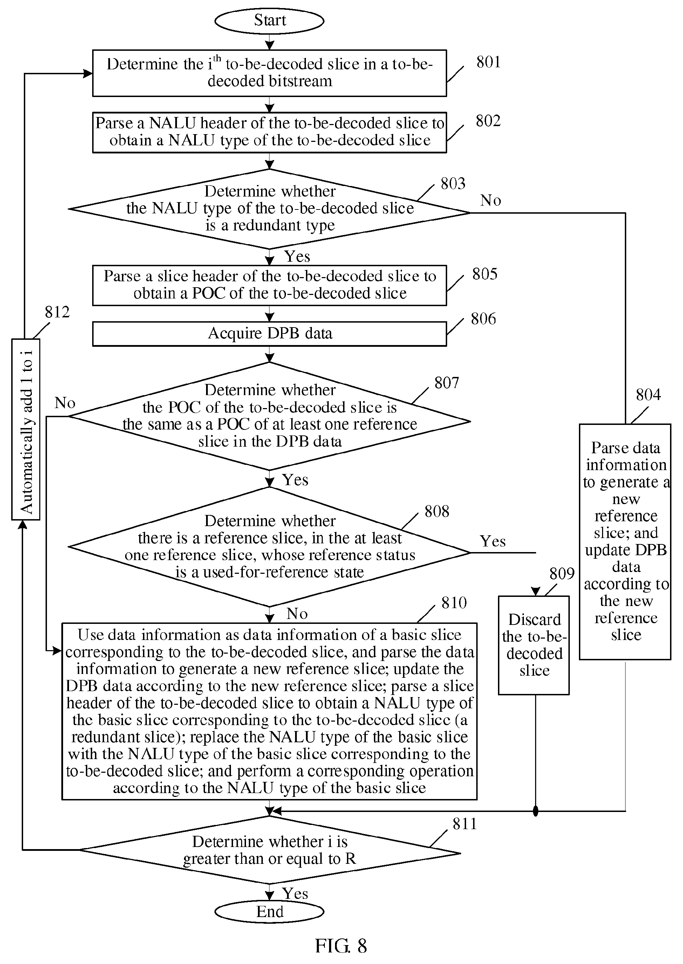

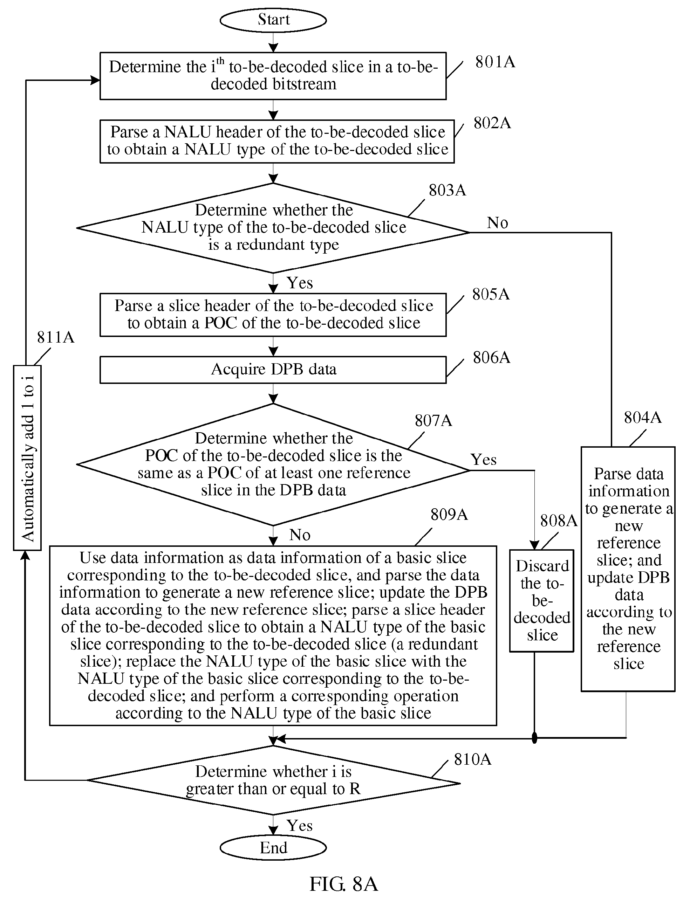

As shown in FIG. 8, Decoding method 1 includes:
801: Determine the i^{th} to-be-decoded slice in a to-be-decoded bitstream.

If the to-be-decoded slice is a basic slice, the to-be-decoded slice includes data information and a POC of the to-be-decoded slice; if the to-be-decoded slice is a redundant slice, the to-be-decoded slice includes data information, a POC of the to-be-decoded slice, a NALU type of the to-be-decoded slice, and a NALU type of a basic slice corresponding to the to-be-decoded slice, where the NALU type of the to-be-decoded slice is a redundant type and is used to represent that the to-be-decoded slice is a redundant slice. In addition, the POC of the to-be-decoded slice is located in a slice header; the NALU type (the redundant type) of the to-be-decoded slice is located in a NALU header; and the NALU type of the basic slice corresponding to the to-be-decoded slice (the redundant slice) is located in the slice header.

In addition, if the to-be-decoded slice is a basic slice, the to-be-decoded slice further includes a NALU type (for example, an IDR type or a RASL type, the NALU type is not a redundant type or an IRAP type) of the to-be-decoded slice.

In this embodiment, assuming that there are totally R to-be-decoded slices in the to-be-decoded bitstream in this embodiment, i ≤ R, both i and R are values greater than 0, and an initial value of i is 1.

802: Parse a NALU header of the to-be-decoded slice to obtain a NALU type of the to-be-decoded slice.

803: Determine whether the NALU type of the to-be-decoded slice is a redundant type.

If not, step 804 is performed; if yes, step 805 is performed.

804: Parse data information to generate a new reference slice; and update DPB data according to the new reference slice.

Step 811 is performed after step 804.

805: Parse a slice header of the to-be-decoded slice to obtain a POC of the to-be-decoded slice.

806: Acquire DPB data, where the DPB data includes zero, one, or multiple reference slices.

807: Determine whether the POC of the to-be-decoded slice is the same as a POC of at least one reference slice in the DPB data.

If yes, step 808 is performed; if not, step 810 is performed.

808: Determine whether there is a reference slice, in the at least one reference slice, whose reference status is an available reference state.

If yes, step 809 is performed; if not, step 810 is performed.

809: Discard the to-be-decoded slice.

Step 811 is performed after step 809 is performed.

810: Use data information as data information of a basic slice corresponding to the to-be-decoded slice, and parse the data information to generate a new reference slice; update the DPB data according to the new reference slice; parse the slice header of the to-be-decoded slice to obtain a NALU type of the basic slice corresponding to the to-be-decoded slice (a redundant slice); replace the NALU type of the basic slice with the NALU type of the basic slice corresponding to the to-be-decoded slice; and perform a corresponding operation according to the NALU type of the basic slice.

Step 811 is performed after step 810.

811: Determine whether i is greater than or equal to R.

If yes, the process ends; if not, step 812 is performed.

812: Automatically add 1 to i.

Step 801 is performed after step 812.

As shown in FIG. 8A, Decoding method 2 includes:
801A: Determine the i^{th} to-be-decoded slice in a to-be-decoded bitstream.

If the to-be-decoded slice is a basic slice, the to-be-decoded slice includes data information and a POC of the to-be-decoded slice; if the to-be-decoded slice is a redundant slice, the to-be-decoded slice includes data information, a POC of the to-be-decoded slice, a NALU type of the to-be-decoded slice, and a NALU type of a basic slice corresponding to the to-be-decoded slice, where the NALU type of the to-be-decoded slice is a redundant type and is used to represent that the to-be-decoded slice is a redundant slice. In addition, the POC of the to-be-decoded slice is located in a slice header; the NALU type (the redundant type) of the to-be-decoded slice is located in a NALU header; and the NALU type of the basic slice corresponding to the to-be-decoded slice (the redundant slice) is located in the slice header.

In addition, if the to-be-decoded slice is a basic slice, the to-be-decoded slice further includes a NALU type (for example, an IDR type or a RASL type, the NALU type is not a redundant type or an IRAP type) of the to-be-decoded slice.

In this embodiment, assuming that there are totally R to-be-decoded slices in the to-be-decoded bitstream in this embodiment, i ≤ R, both i and R are values greater than 0, and an initial value of i is 1.

802A: Parse a NALU header of the to-be-decoded slice to obtain a NALU type of the to-be-decoded slice.

803A: Determine whether the NALU type of the to-be-decoded slice is a redundant type.

If not, step 804A is performed; if yes, step 805A is performed.

804A: Parse data information to generate a new reference slice; and update DPB data according to the new reference slice.

Step 810A is performed after step 804A.

805A: Parse a slice header of the to-be-decoded slice to obtain a POC of the to-be-decoded slice.

806A: Acquire DPB data, where the DPB data includes zero, one, or multiple reference slices.

807A: Determine whether the POC of the to-be-decoded slice is the same as a POC of at least one reference slice in the DPB data.

If yes, step 808A is performed; if not, step 809A is performed.

808A: Discard the to-be-decoded slice.

Step 810A is performed after step 808A is performed.

809A: Use data information as data information of a basic slice corresponding to the to-be-decoded slice, and parse the data information to generate a new reference slice; update the DPB data according to the new reference slice; parse the slice header of the to-be-decoded slice to obtain a NALU type of the basic slice corresponding to the to-be-decoded slice (a redundant slice); replace the NALU type of the basic slice with the NALU type of the basic slice corresponding to the to-be-decoded slice; and perform a corresponding operation according to the NALU type of the basic slice, for example, when the NALU type is an IRAP (BLA, IDR, and CRA), and no RASL frame related to the NALU type is output, all reference frames in DPB are set to be incapable of being used for reference by another frame, and a POC of the frame is set to 0.

Step 810A is performed after step 809A.

810A: Determine whether i is greater than or equal to R.

If yes, the process ends; if not, step 811A is performed.

811A: Automatically add 1 to i.

Step 801A is performed after step 811A.

According to the video data coding and decoding methods provided in this embodiment, a basic slice does not need to be decoded before a redundant slice corresponding to the basic slice is decoded, that is, the basic slice does not need to be transmitted before the redundant slice corresponding to the basic slice is transmitted; therefore, transmission flexibility can be improved.

### Embodiment 4

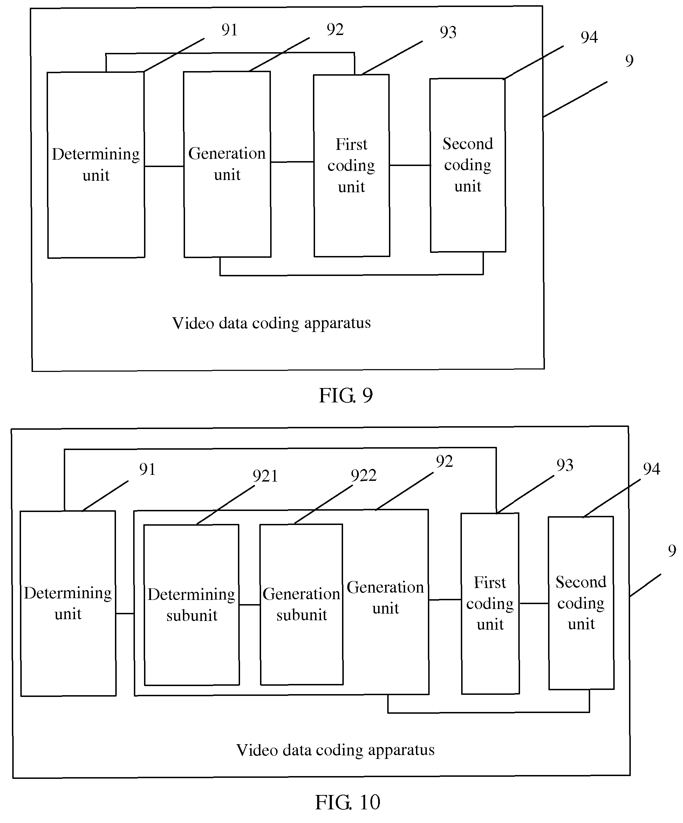

As shown in FIG. 9, FIG. 9 shows a video data coding apparatus 9 provided in this embodiment of the present invention, so as to execute the video data coding method shown in FIG. 1. The apparatus 9 includes:
a determining unit 91, configured to determine a to-be-coded information group in a to-be-coded video sequence, where the to-be-coded information group includes first to-be-coded data;
a generation unit 92, configured to generate a redundant information group corresponding to the to-be-coded information group, where the redundant information group includes second to-be-coded data, and location information of the redundant information group is the same as location information of the to-be-coded information group in the to-be-coded video sequence;
a first coding unit 93, configured to code the first to-be-coded data and the location information to generate a first information group; and
a second coding unit 94, configured to code the second to-be-coded data and the location information to generate a second information group.

Optionally, the second coding unit 94 is specifically configured to: when a reference information group set includes the first information group, code the second to-be-coded data and the location information to generate the second information group, where the reference information group set consists of a reference information group, and the reference information group refers to an information group generated after the to-be-coded information group in the to-be-coded video sequence is coded.

Optionally, the first coding unit 93 is specifically configured to code the first to-be-coded data, the location information, and attribute information of the first information group to generate the first information group, where the attribute information of the first information group is used to represent that the first information group is a basic information group.

Optionally, the attribute information of the first information group is located in a network abstraction layer unit header of the first information group.

Optionally, the second coding unit 94 is specifically configured to code the second to-be-coded data, the location information, attribute information of the second information group, and a network abstraction layer unit type of the first information group to generate the second information group, where the attribute information of the second information group is used to represent that the second information group is the redundant information group.

Optionally, the attribute information of the second information group is located in a network abstraction layer unit header of the second information group.

Optionally, the network abstraction layer unit type of the first information group is located in a side information set of the second information group.

Optionally, the location information includes: a display location of the to-be-coded information group in the to-be-coded video sequence, or a coding location of the to-be-coded information group in the to-be-coded video sequence.

Optionally, the to-be-coded information group is one of the following video coding units: a picture, a slice, a tile, and a frame.

Optionally, as shown in FIG. 10, the generation unit 92 includes:
a determining subunit 921, configured to determine to-be-used-for-reference information in the to-be-coded information group, where the to-be-used-for-reference information refers to information used for reference by another to-be-coded information group in the to-be-coded video sequence; and
a generation subunit 922, configured to generate a redundant information group corresponding to the to-be-used-for-reference information.

Optionally, a network abstraction layer unit type of the first information group is a non-IRAP type.

According to the video data coding apparatus provided in this embodiment of the present invention, a redundant information group that includes second to-be-coded data and is corresponding to a to-be-coded information group is generated; first to-be-coded data included in the to-be-coded information group and location information of the to-be-coded information group in a to-be-coded video sequence are coded to generate a first information group; and the second to-be-coded data and location information of the redundant information group are coded to generate a second information group, where the location information of the redundant information group is the same as the location information of the to-be-coded information group. In this solution, coding is performed without the need of marking attribute information of the first information group and attribute information of the second information group; therefore, coding efficiency can be improved.

### Embodiment 5

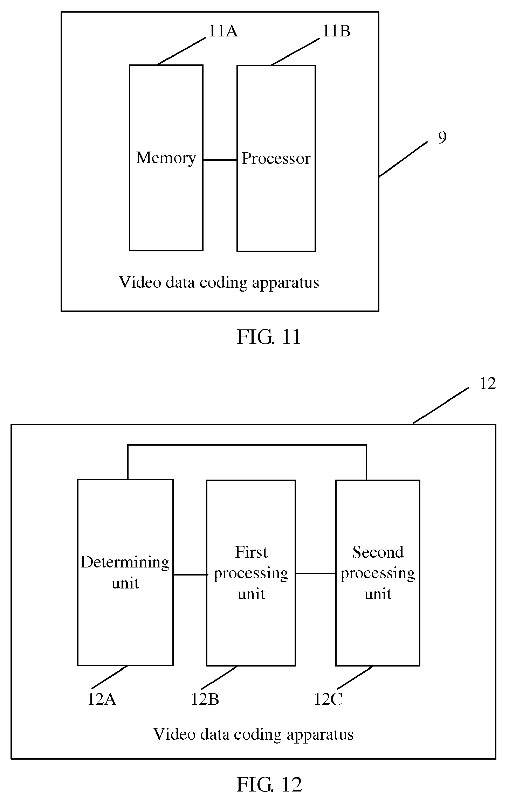

As shown in FIG. 11, FIG. 11 shows a video data coding apparatus 9 provided in this embodiment of the present invention, so as to execute the video data coding method shown in FIG. 1. The apparatus 9 includes:
a memory 11A and a processor 11B.

The memory 11A is configured to store a group of code, where the code is used to control the processor 11B to execute the following actions:
determining a to-be-coded information group in a to-be-coded video sequence, where the to-be-coded information group includes first to-be-coded data;
generating a redundant information group corresponding to the to-be-coded information group, where the redundant information group includes second to-be-coded data, and location information of the redundant information group is the same as location information of the to-be-coded information group in the to-be-coded video sequence;
coding the first to-be-coded data and the location information to generate a first information group; and
coding the second to-be-coded data and the location information to generate a second information group.

Optionally, the processor 11B is specifically configured to: when a reference information group set includes the first information group, code the second to-be-coded data and the location information to generate the second information group, where the reference information group set consists of a reference information group, and the reference information group refers to an information group generated after the to-be-coded information group in the to-be-coded video sequence is coded.

Optionally, the processor 11B is specifically configured to code the first to-be-coded data, the location information, and attribute information of the first information group to generate the first information group, where the attribute information of the first information group is used to represent that the first information group is a basic information group.

Optionally, the attribute information of the first information group is located in a network abstraction layer unit header of the first information group.

Optionally, the processor 11B is specifically configured to code the second to-be-coded data, the location information, attribute information of the second information group, and a network abstraction layer unit type of the first information group to generate the second information group, where the attribute information of the second information group is used to represent that the second information group is the redundant information group.

Optionally, the attribute information of the second information group is located in a network abstraction layer unit header of the second information group.

Optionally, the network abstraction layer unit type of the first information group is located in a side information set of the second information group.

Optionally, the location information includes: a display location of the to-be-coded information group in the to-be-coded video sequence, or a coding location of the to-be-coded information group in the to-be-coded video sequence.

Optionally, the to-be-coded information group is one of the following video coding units: a picture, a slice, a tile, and a frame.

Optionally, the processor 11B is specifically configured to: determine to-be-used-for-reference information in the to-be-coded information group, where the to-be-used-for-reference information refers to information used for reference by another to-be-coded information group in the to-be-coded video sequence; and generate a redundant information group corresponding to the to-be-used-for-reference information.

Optionally, a network abstraction layer unit type of the first information group is a non-IRAP type.

According to the video data coding apparatus provided in this embodiment of the present invention, a redundant information group that includes second to-be-coded data and is corresponding to a to-be-coded information group is generated; first to-be-coded data included in the to-be-coded information group and location information of the to-be-coded information group in a to-be-coded video sequence are coded to generate a first information group; and the second to-be-coded data and location information of the redundant information group are coded to generate a second information group, where the location information of the redundant information group is the same as the location information of the to-be-coded information group. In this solution, coding is performed without the need of marking attribute information of the first information group and attribute information of the second information group; therefore, coding efficiency can be improved.

### Embodiment 6

As shown in FIG. 12, FIG. 12 shows a video data decoding apparatus 12 provided in this embodiment of the present invention, so as to execute the video data decoding method shown in FIG. 2. The apparatus 12 includes:
a determining unit 12A, configured to determine a to-be-decoded information group in a to-be-decoded bitstream and a reference information group set, where the to-be-decoded information group includes data information and location information of the to-be-decoded information group; the to-be-decoded bitstream includes a basic information group and a redundant information group corresponding to the basic information group, and a location of the basic information group in the to-be-decoded bitstream is in front of the redundant information group; the to-be-decoded information group is a basic information group or redundant information group; and the reference information group set consists of a reference information group, and the reference information group refers to an information group generated after the data information of the to-be-decoded information group in the to-be-decoded bitstream is parsed; and
a first processing unit 12B, configured to discard the to-be-decoded information group if location information of at least one reference information group in the reference information group set is the same as the location information of the to-be-decoded information group; or a second processing unit 12C, configured to parse the data information if location information of all reference information groups in the reference information group set is different from the location information of the to-be-decoded information group.

It should be noted that during specific implementation, both the first processing unit 12B and the second processing unit 12C may exist, which is used as an example for description in FIG. 12.

Optionally, the reference information group in the reference information group set includes a reference status, where the reference status includes an available reference state and an unavailable reference state; and location information of a first reference information group in the reference information group set is the same as the location information of the to-be-decoded information group; and
the first processing unit 12B is specifically configured to discard the to-be-decoded information group if a reference status of the first reference information group is an available reference state.

Optionally, the first processing unit 12B is further configured to parse the data information if the reference status of the first reference information group is an unavailable reference state.

Optionally, the available reference state includes: a used-for-long-term-reference state and a short-term-reference state.

Optionally, the to-be-decoded information group is one of the following video decoding units: a picture, a slice, a tile, and a frame.

Optionally, a network abstraction layer unit type of the to-be-decoded information group is a non-IRAP type.

According to the video data decoding apparatus provided in this embodiment, a to-be-decoded information group in a to-be-decoded bitstream includes data information and location information of the to-be-decoded information group; and the to-be-decoded information group is discarded if location information of at least one reference information group in a reference information group set of the to-be-decoded information group is the same as the location information of the to-be-decoded information group, or the data information is parsed if location information of all reference information groups in a reference information group set of the to-be-decoded information group is the same as the location information of the to-be-decoded information group, where a first to-be-decoded information group may be a slice. Compared with a video data decoding method provided in the prior art, in this solution, a slice does not need to be marked as a basic slice or redundant slice in a video data coding process; therefore, coding efficiency can be improved.

### Embodiment 7

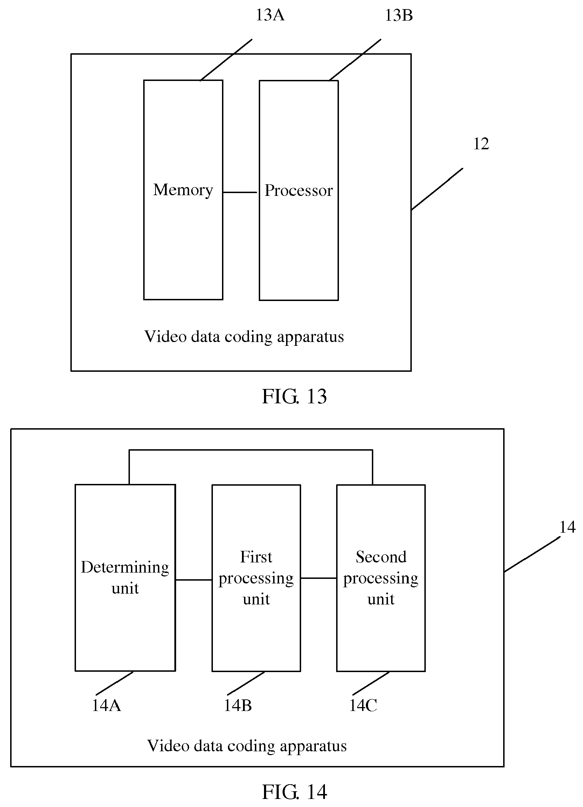

As shown in FIG. 13, FIG. 13 shows a video data decoding apparatus 12 provided in this embodiment of the present invention, so as to execute the video data decoding method shown in FIG. 2. The apparatus 12 includes:
a memory 13A and a processor 13B.

The memory 13A is configured to store a group of code, where the code is used to control the processor 13B to execute the following actions:
determining a to-be-decoded information group in a to-be-decoded bitstream and a reference information group set, where the to-be-decoded information group includes data information and location information of the to-be-decoded information group; the to-be-decoded bitstream includes a basic information group and a redundant information group corresponding to the basic information group, and a location of the basic information group in the to-be-decoded bitstream is in front of the redundant information group; the to-be-decoded information group is a basic information group or redundant information group; and the reference information group set consists of a reference information group, and the reference information group refers to an information group generated after the data information of the to-be-decoded information group in the to-be-decoded bitstream is parsed; and
discarding the to-be-decoded information group if location information of at least one reference information group in the reference information group set is the same as the location information of the to-be-decoded information group; or parsing the data information if location information of all reference information groups in the reference information group set is different from the location information of the to-be-decoded information group.

Optionally, the reference information group in the reference information group set includes a reference status, where the reference status includes an available reference state and an unavailable reference state; and location information of a first reference information group in the reference information group set is the same as the location information of the to-be-decoded information group; and
the processor 13B is specifically configured to discard the to-be-decoded information group if a reference status of the first reference information group is an available reference state.

Optionally, the processor 13B is further configured to parse the data information if the reference status of the first reference information group is an unavailable reference state.

Optionally, the available reference state includes: a used-for-long-term-reference state and a short-term-reference state.

Optionally, the to-be-decoded information group is one of the following video decoding units: a picture, a slice, a tile, and a frame.

Optionally, a network abstraction layer unit type of the to-be-decoded information group is a non-IRAP type.

According to the video data decoding apparatus provided in this embodiment, a to-be-decoded information group in a to-be-decoded bitstream includes data information and location information of the to-be-decoded information group; and the to-be-decoded information group is discarded if location information of at least one reference information group in a reference information group set of the to-be-decoded information group is the same as the location information of the to-be-decoded information group, or the data information is parsed if location information of all reference information groups in a reference information group set of the to-be-decoded information group is the same as the location information of the to-be-decoded information group, where a first to-be-decoded information group may be a slice. Compared with a video data decoding method provided in the prior art, in this solution, a slice does not need to be marked as a basic slice or redundant slice in a video data coding process; therefore, coding efficiency can be improved.

### Embodiment 8

As shown in FIG. 14, FIG. 14 shows a video data decoding apparatus 14 provided in this embodiment of the present invention, so as to execute the video data decoding method shown in FIG. 3. The apparatus 14 includes:
a determining unit 14A, configured to: determine a first to-be-decoded information group in a to-be-decoded bitstream, where the first to-be-decoded information group includes data information, attribute information, and location information of the first to-be-decoded information group, and the attribute information is used to represent that the first to-be-decoded information group is a basic information group or redundant information group; and
determine a reference information group set in a case in which the attribute information represents that the first to-be-decoded information group is the redundant information group, where the reference information group set consists of a reference information group, and the reference information group refers to an information group generated after data information of a to-be-decoded information group in the to-be-decoded bitstream is parsed; and
a first processing unit 14B, configured to discard the first to-be-decoded information group if location information of at least one reference information group in the reference information group set is the same as the location information of the first to-be-decoded information group; or
a second processing unit 14C, configured to parse the data information if location information of all reference information groups in the reference information group set is different from the location information of the first to-be-decoded information group.

It should be noted that during specific implementation, both the first processing unit 14B and the second processing unit 14C may exist, which is used as an example for description in FIG. 14.

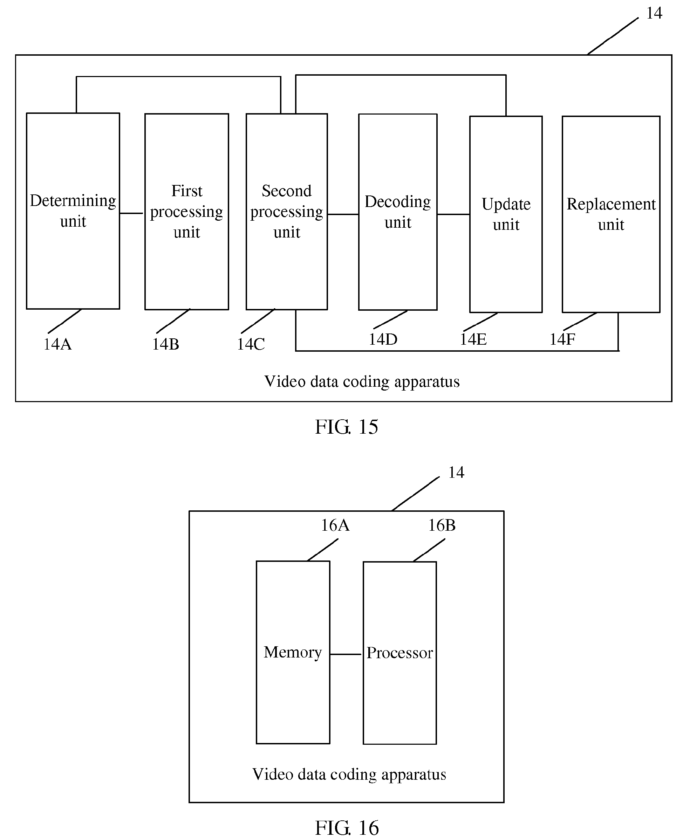

Optionally, when the apparatus includes the second processing unit 14C, the determining unit 14A is further configured to determine a second to-be-decoded information group in the to-be-decoded bitstream.
as shown in FIG. 15, the apparatus further includes: a decoding unit 14D, configured to decode the second to-be-decoded information group; and
an updating unit 14E, configured to update the reference information group set after the second to-be-decoded information group is decoded; and
the second processing unit 14C is specifically configured to parse the data information if location information of all reference information groups in an updated reference information group set is different from the location information of the first to-be-decoded information group.

Optionally, the second processing unit 14C is further configured to discard the first to-be-coded information group if location information of at least one reference information group in the updated reference information group set is the same as the location information of the first to-be-decoded information group.

Optionally, the reference information group in the reference information group set includes a reference status, where the reference status includes an available reference state and an unavailable reference state; and location information of a first reference information group in the reference information group set is the same as the location information of the first to-be-decoded information group; and
the first processing unit 14B is specifically configured to discard the first to-be-decoded information group if a reference status of the first reference information group is an available reference state.

Optionally, the first processing unit 14B is further configured to parse the data information if the reference status of the first reference information group is an unavailable reference state.

Optionally, the attribute information of the first to-be-decoded information group is located in a network abstraction layer unit header of the first to-be-decoded information group.

Optionally, the available reference state includes: a used-for-long-term-reference state and a short-term-reference state.

Optionally, the attribute information of the first to-be-decoded information group represents that the first to-be-decoded information group is a redundant information group, and the first to-be-decoded information group further includes a network abstraction layer unit type of a basic information group corresponding to the first to-be-decoded information group; and
as shown in FIG. 15, when the apparatus includes the second processing unit 14C, the apparatus further includes:
a replacement unit 14F, configured to replace the network abstraction layer unit type with the network abstraction layer unit type of the basic information group corresponding to the first to-be-decoded information group.

Optionally, the network abstraction layer unit type of the basic information group corresponding to the first to-be-decoded information group is located in a side information set of the first to-be-decoded information group.

Optionally, the first to-be-decoded information group is one of the following video decoding units: a picture, a slice, a tile, and a frame.

Optionally, a network abstraction layer unit type of the first to-be-decoded information group is a non-IRAP type.

According to the video data decoding apparatus provided in this embodiment, a first to-be-decoded information group in a to-be-decoded bitstream includes data information, attribute information, and location information of the first to-be-decoded information group; and in a case in which the attribute information represents that the first to-be-decoded information group is a redundant information group, the first to-be-decoded information group is discarded if location information of at least one reference information group in a reference information group set of the first to-be-decoded information group is the same as the location information of the first to-be-decoded information group, or the data information is parsed if location information of all reference information groups in a reference information group set of the first to-be-decoded information group is different from the location information of the first to-be-decoded information group, where the first to-be-decoded information group may be a slice. Compared with a video data decoding method provided in the prior art, in this solution, a basic slice does not need to be decoded before a redundant slice corresponding to the basic slice is decoded, that is, the basic slice needs to be transmitted before the redundant slice corresponding to the basic slice is transmitted; therefore, transmission flexibility can be improved.

### Embodiment 9

As shown in FIG. 16, FIG. 16 shows a video data decoding apparatus 14 provided in this embodiment of the present invention, so as to execute the video data decoding method shown in FIG. 3. The apparatus 14 includes:
a memory 16A and a processor 16B.

The memory 16A is configured to store a group of code, where the code is used to control the processor 16B to execute the following actions:
determining a first to-be-decoded information group in a to-be-decoded bitstream, where the first to-be-decoded information group includes data information, attribute information, and location information of the first to-be-decoded information group, and the attribute information is used to represent that the first to-be-decoded information group is a basic information group or redundant information group;
determining a reference information group set in a case in which the attribute information represents that the first to-be-decoded information group is the redundant information group, where the reference information group set consists of a reference information group, and the reference information group refers to an information group generated after data information of a to-be-decoded information group in the to-be-decoded bitstream is parsed; and
discarding the first to-be-decoded information group if location information of at least one reference information group in the reference information group set is the same as the location information of the first to-be-decoded information group, or
parsing the data information if location information of all reference information groups in the reference information group set is different from the location information of the first to-be-decoded information group.

Optionally, if the location information of all the reference information groups in the reference information group set is different from the location information of the first to-be-decoded information group, the processor 16B is further configured to execute the following actions:
determining a second to-be-decoded information group in the to-be-decoded bitstream;
decoding the second to-be-decoded information group; and
updating the reference information group set after the second to-be-decoded information group is decoded; and
the processor 16B is specifically configured to parse the data information if location information of all reference information groups in an updated reference information group set is different from the location information of the first to-be-decoded information group.

Optionally, the processor 16B is further configured to discard the first to-be-coded information group if location information of at least one reference information group in the updated reference information group set is the same as the location information of the first to-be-decoded information group.

Optionally, the reference information group in the reference information group set includes a reference status, where the reference status includes an available reference state and an unavailable reference state; and location information of a first reference information group in the reference information group set is the same as the location information of the first to-be-decoded information group; and
the processor 16B is specifically configured to discard the first to-be-decoded information group if location information of at least one reference information group in the reference information group set is the same as the location information of the first to-be-decoded information group, and a reference status of the first reference information group is an available reference state.

Optionally, the data information is parsed if a reference status of the first reference information group is an unavailable reference state.

Optionally, the attribute information of the first to-be-decoded information group is located in a network abstraction layer unit header of the first to-be-decoded information group.

Optionally, the available reference state includes: a used-for-long-term-reference state and a short-term-reference state.

Optionally, the attribute information of the first to-be-decoded information group represents that the first to-be-decoded information group is a redundant information group, and the first to-be-decoded information group further includes a network abstraction layer unit type of a basic information group corresponding to the first to-be-decoded information group; and
if location information of all reference information groups in the reference information group set is different from the location information of the first to-be-decoded information group, the processor 16B is further configured to replace the network abstraction layer unit type with the network abstraction layer unit type of the basic information group corresponding to the first to-be-decoded information group.

Optionally, the network abstraction layer unit type of the basic information group corresponding to the first to-be-decoded information group is located in a side information set of the first to-be-decoded information group.

Optionally, the first to-be-decoded information group is one of the following video decoding units: a picture, a slice, a tile, and a frame.

Optionally, a network abstraction layer unit type of the first to-be-decoded information group is a non-IRAP type.

According to the video data decoding apparatus provided in this embodiment, a first to-be-decoded information group in a to-be-decoded bitstream includes data information, attribute information, and location information of the first to-be-decoded information group; and in a case in which the attribute information represents that the first to-be-decoded information group is a redundant information group, the first to-be-decoded information group is discarded if location information of at least one reference information group in a reference information group set of the first to-be-decoded information group is the same as the location information of the first to-be-decoded information group, or the data information is parsed if location information of all reference information groups in a reference information group set of the first to-be-decoded information group is different from the location information of the first to-be-decoded information group, where the first to-be-decoded information group may be a slice. Compared with a video data decoding method provided in the prior art, in this solution, a basic slice does not need to be decoded before a redundant slice corresponding to the basic slice is decoded, that is, the basic slice needs to be transmitted before the redundant slice corresponding to the basic slice is transmitted; therefore, transmission flexibility can be improved.

It may be clearly understood by persons skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of hardware in addition to a software functional unit.

When the foregoing integrated unit is implemented in a form of a software functional unit, the integrated unit may be stored in a computer-readable storage medium. The software functional unit is stored in a storage medium and includes several instructions for instructing a computer device (which may be a personal computer, a server, or a network device) to perform some of the steps of the methods described in the embodiments of the present invention. The foregoing storage medium includes: any medium that can store program code, such as a USB flash drive, a removable hard disk, a ROM (Read-Only Memory, read-only memory), a RAM (Random Access Memory, random access memory), a magnetic disk, or an optical disc.

Finally, it should be noted that the foregoing embodiments are merely intended for describing the technical solutions of the present invention but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of the present invention.

## Claims

1. A video data coding method, comprising:
determining a to-be-coded information group in a to-be-coded video sequence, wherein the to-be-coded information group comprises first to-be-coded data;
generating a redundant information group corresponding to the to-be-coded information group, wherein the redundant information group comprises second to-be-coded data, and location information of the redundant information group is the same as location information of the to-be-coded information group in the to-be-coded video sequence;
coding the first to-be-coded data and the location information to generate a first information group; and
coding the second to-be-coded data and the location information to generate a second information group.

2. The method according to claim 1, wherein the coding the second to-be-coded data and the location information to generate a second information group comprises:
when a reference information group set comprises the first information group, coding the second to-be-coded data and the location information to generate the second information group, wherein the reference information group set consists of a reference information group, and the reference information group refers to an information group generated after the to-be-coded information group in the to-be-coded video sequence is coded.

3. The method according to claim 1, wherein the coding the first to-be-coded data and the location information to generate a first information group comprises:
coding the first to-be-coded data, the location information, and attribute information of the first information group to generate the first information group, wherein the attribute information of the first information group is used to represent that the first information group is a basic information group.

4. The method according to claim 3, wherein the attribute information of the first information group is located in a network abstraction layer unit header of the first information group.

5. The method according to claim 1, wherein the coding the second to-be-coded data and the location information to generate a second information group comprises:
coding the second to-be-coded data, the location information, attribute information of the second information group, and a network abstraction layer unit type of the first information group to generate the second information group, wherein the attribute information of the second information group is used to represent that the second information group is the redundant information group.

6. The method according to claim 5, wherein the attribute information of the second information group is located in a network abstraction layer unit header of the second information group.

7. The method according to claim 5 or 6, wherein the network abstraction layer unit type of the first information group is located in a side information set of the second information group.

8. The method according to claim 1, wherein the location information comprises: a display location of the to-be-coded information group in the to-be-coded video sequence, or a coding location of the to-be-coded information group in the to-be-coded video sequence.

9. The method according to claim 1, wherein the to-be-coded information group is one of the following video coding units: a picture, a slice, a tile, and a frame.

10. The method according to claim 1, wherein the generating a redundant information group corresponding to the to-be-coded information group comprises:
determining to-be-used-for-reference information in the to-be-coded information group, wherein the to-be-used-for-reference information refers to information used for reference by another to-be-coded information group in the to-be-coded video sequence; and
generating a redundant information group corresponding to the to-be-used-for-reference information.

11. The method according to claim 1, wherein a network abstraction layer unit type of the first information group is a non-intra random access point IRAP type.

12. A video data decoding method, comprising:
determining a to-be-decoded information group in a to-be-decoded bitstream and a reference information group set, wherein the to-be-decoded information group comprises data information and location information of the to-be-decoded information group; the to-be-decoded bitstream comprises a basic information group and a redundant information group corresponding to the basic information group, and a location of the basic information group in the to-be-decoded bitstream is in front of the redundant information group; the to-be-decoded information group is a basic information group or redundant information group; and the reference information group set consists of a reference information group, and the reference information group refers to an information group generated after the data information of the to-be-decoded information group in the to-be-decoded bitstream is parsed; and
discarding the to-be-decoded information group if location information of at least one reference information group in the reference information group set is the same as the location information of the to-be-decoded information group; or
parsing the data information if location information of all reference information groups in the reference information group set is different from the location information of the to-be-decoded information group.

13. The method according to claim 12, wherein the reference information group in the reference information group set comprises a reference status, wherein the reference status comprises an available reference state and an unavailable reference state; and location information of a first reference information group in the reference information group set is the same as the location information of the to-be-decoded information group; and
the discarding the to-be-decoded information group if location information of at least one reference information group in the reference information group set is the same as the location information of the to-be-decoded information group comprises:
discarding the to-be-decoded information group if a reference status of the first reference information group is an available reference state.

14. The method according to claim 13, wherein the method further comprises:
parsing the data information if the reference status of the first reference information group is an unavailable reference state.

15. The method according to claim 13, wherein the available reference state comprises: a used-for-long-term-reference state and a short-term-reference state.

16. The method according to claim 12, wherein the to-be-decoded information group is one of the following video decoding units: a picture, a slice, a tile, and a frame.

17. The method according to claim 12, wherein a network abstraction layer unit type of the to-be-decoded information group is a non-intra random access point IRAP type.

18. A video data decoding method, comprising:
determining a first to-be-decoded information group in a to-be-decoded bitstream, wherein the first to-be-decoded information group comprises data information, attribute information, and location information of the first to-be-decoded information group, and the attribute information is used to represent that the first to-be-decoded information group is a basic information group or redundant information group;
determining a reference information group set in a case in which the attribute information represents that the first to-be-decoded information group is the redundant information group, wherein the reference information group set consists of a reference information group, and the reference information group refers to an information group generated after data information of a to-be-decoded information group in the to-be-decoded bitstream is parsed; and
discarding the first to-be-decoded information group if location information of at least one reference information group in the reference information group set is the same as the location information of the first to-be-decoded information group, or parsing the data information if location information of all reference information groups in the reference information group set is different from the location information of the first to-be-decoded information group.

19. The method according to claim 18, wherein before the parsing the data information if location information of all reference information groups in the reference information group set is different from the location information of the first to-be-decoded information group, the method further comprises:
determining a second to-be-decoded information group in the to-be-decoded bitstream;
decoding the second to-be-decoded information group; and
updating the reference information group set after the second to-be-decoded information group is decoded; and
the parsing the data information comprises:
parsing the data information if location information of all reference information groups in an updated reference information group set is different from the location information of the first to-be-decoded information group.

20. The method according to claim 19, wherein the method further comprises:
discarding the first to-be-coded information group if location information of at least one reference information group in the updated reference information group set is the same as the location information of the first to-be-decoded information group.

21. The method according to claim 18, wherein the reference information group in the reference information group set comprises a reference status, wherein the reference status comprises an available reference state and an unavailable reference state; and location information of a first reference information group in the reference information group set is the same as the location information of the first to-be-decoded information group; and
the discarding the first to-be-decoded information group if location information of at least one reference information group in the reference information group set is the same as the location information of the first to-be-decoded information group comprises:
discarding the first to-be-decoded information group if a reference status of the first reference information group is an available reference state.

22. The method according to claim 21, wherein the method further comprises:
parsing the data information if the reference status of the first reference information group is an unavailable reference state.

23. The method according to claim 18, wherein the attribute information of the first to-be-decoded information group is located in a network abstraction layer unit header of the first to-be-decoded information group.

24. The method according to claim 21, wherein the available reference state comprises: a used-for-long-term-reference state and a short-term-reference state.

25. The method according to any one of claims 18 to 24, wherein the attribute information of the first to-be-decoded information group represents that the first to-be-decoded information group is a redundant information group, and the first to-be-decoded information group further comprises a network abstraction layer unit type of a basic information group corresponding to the first to-be-decoded information group; and
after the parsing the data information in a case in which location information of all reference information groups in the reference information group set is different from the location information of the first to-be-decoded information group, the method further comprises:
replacing the network abstraction layer unit type with the network abstraction layer unit type of the basic information group corresponding to the first to-be-decoded information group.

26. The method according to claim 25, wherein the network abstraction layer unit type of the basic information group corresponding to the first to-be-decoded information group is located in a side information set of the first to-be-decoded information group.

27. The method according to claim 18, wherein the first to-be-decoded information group is one of the following video decoding units: a picture, a slice, a tile, and a frame.

28. The method according to claim 18, wherein a network abstraction layer unit type of the first to-be-decoded information group is a non-IRAP type.

29. A video data coding apparatus, comprising:
a determining unit, configured to determine a to-be-coded information group in a to-be-coded video sequence, wherein the to-be-coded information group comprises first to-be-coded data;
a generation unit, configured to generate a redundant information group corresponding to the to-be-coded information group, wherein the redundant information group comprises second to-be-coded data, and location information of the redundant information group is the same as location information of the to-be-coded information group in the to-be-coded video sequence;
a first coding unit, configured to code the first to-be-coded data and the location information to generate a first information group; and
a second coding unit, configured to code the second to-be-coded data and the location information to generate a second information group.

30. The apparatus according to claim 29, wherein:
the second coding unit is specifically configured to: when a reference information group set comprises the first information group, code the second to-be-coded data and the location information to generate the second information group, wherein the reference information group set consists of a reference information group, and the reference information group refers to an information group generated after the to-be-coded information group in the to-be-coded video sequence is coded.

31. The apparatus according to claim 29, wherein:
the first coding unit is specifically configured to code the first to-be-coded data, the location information, and attribute information of the first information group to generate the first information group, wherein the attribute information of the first information group is used to represent that the first information group is a basic information group.

32. The apparatus according to claim 31, wherein the attribute information of the first information group is located in a network abstraction layer unit header of the first information group.

33. The apparatus according to claim 29, wherein:
the second coding unit is specifically configured to code the second to-be-coded data, the location information, attribute information of the second information group, and a network abstraction layer unit type of the first information group to generate the second information group, wherein the attribute information of the second information group is used to represent that the second information group is the redundant information group.

34. The apparatus according to claim 33, wherein the attribute information of the second information group is located in a network abstraction layer unit header of the second information group.

35. The apparatus according to claim 33 or 34, wherein the network abstraction layer unit type of the first information group is located in a side information set of the second information group.

36. The apparatus according to claim 29, wherein the location information comprises: a display location of the to-be-coded information group in the to-be-coded video sequence, or a coding location of the to-be-coded information group in the to-be-coded video sequence.

37. The apparatus according to claim 29, wherein the to-be-coded information group is one of the following video coding units: a picture, a slice, a tile, and a frame.

38. The apparatus according to claim 29, wherein the generation unit comprises:
a determining subunit, configured to determine to-be-used-for-reference information in the to-be-coded information group, wherein the to-be-used-for-reference information refers to information used for reference by another to-be-coded information group in the to-be-coded video sequence; and
a generation subunit, configured to generate a redundant information group corresponding to the to-be-used-for-reference information.

39. The apparatus according to claim 29, wherein a network abstraction layer unit type of the first information group is a non-intra random access point IRAP type.

40. A video data decoding apparatus, comprising:
a determining unit, configured to determine a to-be-decoded information group in a to-be-decoded bitstream and a reference information group set, wherein the to-be-decoded information group comprises data information and location information of the to-be-decoded information group; the to-be-decoded bitstream comprises a basic information group and a redundant information group corresponding to the basic information group, and a location of the basic information group in the to-be-decoded bitstream is in front of the redundant information group; the to-be-decoded information group is a basic information group or redundant information group; and the reference information group set consists of a reference information group, and the reference information group refers to an information group generated after the data information of the to-be-decoded information group in the to-be-decoded bitstream is parsed; and
a first processing unit, configured to discard the to-be-decoded information group if location information of at least one reference information group in the reference information group set is the same as the location information of the to-be-decoded information group; or a second processing unit, configured to parse the data information if location information of all reference information groups in the reference information group set is different from the location information of the to-be-decoded information group.

41. The apparatus according to claim 40, wherein the reference information group in the reference information group set comprises a reference status, wherein the reference status comprises an available reference state and an unavailable reference state; and location information of a first reference information group in the reference information group set is the same as the location information of the to-be-decoded information group; and
the first processing unit is specifically configured to discard the to-be-decoded information group if a reference status of the first reference information group is an available reference state.

42. The apparatus according to claim 41, wherein:
the first processing unit is further configured to parse the data information if the reference status of the first reference information group is an unavailable reference state.

43. The apparatus according to claim 41, wherein the available reference state comprises: a used-for-long-term-reference state and a short-term-reference state.

44. The apparatus according to claim 40, wherein the to-be-decoded information group is one of the following video decoding units: a picture, a slice, a tile, and a frame.

45. The apparatus according to claim 40, wherein a network abstraction layer unit type of the to-be-decoded information group is a non-intra random access point IRAP type.

46. A video data decoding apparatus, comprising:
a determining unit, configured to: determine a first to-be-decoded information group in a to-be-decoded bitstream, wherein the first to-be-decoded information group comprises data information, attribute information, and location information of the first to-be-decoded information group, and the attribute information is used to represent that the first to-be-decoded information group is a basic information group or redundant information group; and
determine a reference information group set in a case in which the attribute information represents that the first to-be-decoded information group is the redundant information group, wherein the reference information group set consists of a reference information group, and the reference information group refers to an information group generated after data information of a to-be-decoded information group in the to-be-decoded bitstream is parsed; and
a first processing unit, configured to discard the first to-be-decoded information group if location information of at least one reference information group in the reference information group set is the same as the location information of the first to-be-decoded information group; or
a second processing unit, configured to parse the data information if location information of all reference information groups in the reference information group set is different from the location information of the first to-be-decoded information group.

47. The apparatus according to claim 46, wherein:
when the apparatus comprises the foregoing second processing unit, the determining unit is further configured to determine a second to-be-decoded information group in the to-be-decoded bitstream;
the apparatus further comprises: a decoding unit, configured to decode the second to-be-decoded information group; and
an updating unit, configured to update the reference information group set after the second to-be-decoded information group is decoded; and
the second processing unit is specifically configured to parse the data information if location information of all reference information groups in an updated reference information group set is different from the location information of the first to-be-decoded information group.

48. The apparatus according to claim 47, wherein:
the second processing unit is further configured to discard the first to-be-coded information group if location information of at least one reference information group in the updated reference information group set is the same as the location information of the first to-be-decoded information group.

49. The apparatus according to claim 46, wherein the reference information group in the reference information group set comprises a reference status, wherein the reference status comprises an available reference state and an unavailable reference state; and location information of a first reference information group in the reference information group set is the same as the location information of the first to-be-decoded information group; and
the first processing unit is specifically configured to discard the first to-be-decoded information group if a reference status of the first reference information group is an available reference state.

50. The apparatus according to claim 49, wherein:
the first processing unit is further configured to parse the data information if the reference status of the first reference information group is an unavailable reference state.

51. The apparatus according to claim 46, wherein the attribute information of the first to-be-decoded information group is located in a network abstraction layer unit header of the first to-be-decoded information group.

52. The apparatus according to claim 49, wherein the available reference state comprises: a used-for-long-term-reference state and a short-term-reference state.

53. The apparatus according to any one of claims 46 to 52, wherein the attribute information of the first to-be-decoded information group represents that the first to-be-decoded information group is a redundant information group, and the first to-be-decoded information group further comprises a network abstraction layer unit type of a basic information group corresponding to the first to-be-decoded information group; and
when the apparatus comprises the second processing unit, the apparatus further comprises:
a replacement unit, configured to replace the network abstraction layer unit type with the network abstraction layer unit type of the basic information group corresponding to the first to-be-decoded information group.

54. The apparatus according to claim 53, wherein the network abstraction layer unit type of the basic information group corresponding to the first to-be-decoded information group is located in a side information set of the first to-be-decoded information group.

55. The apparatus according to claim 46, wherein the first to-be-decoded information group is one of the following video decoding units: a picture, a slice, a tile, and a frame.

56. The apparatus according to claim 46, wherein a network abstraction layer unit type of the first to-be-decoded information group is a non-intra random access point IRAP type.
